(19) Europäisches Patentamt

European Patent Office

Office européen des brevets

(11) **EP 1 067 444 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(51) Int Cl.⁷: **G05B 17/02**, G05B 13/02

(21) Anmeldenummer: **00107402.0**

(22) Anmeldetag: **05.04.2000**

(54) **Verfahren und Anordnung zur Modellierung eines technischen Systems**

Method and device for modeling a technical system

Procédé et dispositif pour modeler un système technique

(84) Benannte Vertragsstaaten:
**DE FR GB**

(30) Priorität: **08.04.1999 DE 19915854**

(43) Veröffentlichungstag der Anmeldung:
**10.01.2001 Patentblatt 2001/02**

(73) Patentinhaber: **SIEMENS AKTIENGESELLSCHAFT**
**80333 München (DE)**

(72) Erfinder:
• **Hofmeister, Michael, Dr.**
**84405 Dorfen (DE)**
• **Moll, Christoph**
**81735 München (DE)**

(56) Entgegenhaltungen:
EP-A2- 0 364 189           EP-A2- 0 411 873
WO-A1-98/12612           DE-A1- 19 706 767

• **COMPUTERS IN INDUSTRY Band 36, 01 Juni 1998, Seiten 209-229, XP002901357, A. ARTIBA, F. RIANE: "AN APPLICATION OF A PLANNING AND SCHEDULING MULTI-MODEL APPROACH IN THE CHEMICAL INDUSTRY",**
• **JOURNAL OF SYSTEMS ARCHITECTURE, Band 44, März 1998, Seiten 433-455, XP002901358, K.H. KIM et al.: "HIERARCHICAL PARTITIONING ALGORITHM FOR OPTIMISTIC DISTRIBUTED SIMULATION OF DEVS MODELS",**
• **COMPUTER-AIDED DESIGN, Band 30, Nr. 6, 06 Mai 1998, Seiten 411-423, XP002901359, FRANCIS PAHNG et al.:"DISTRIBUTION MODELING AND EVALUATION OF PRODUCT DESIGN PROBLEMS",**

EP 1 067 444 B1

**Beschreibung**

Die Erfindung betrifft ein Verfahren und eine Anordnung zur Modellierung eines technischen Systems.

Bei der Planung und/oder Anpassung eines komplexen technischen Systems ist eine geeignete Modellierung von herausragender Bedeutung. So steht regelmäßig vor der Umsetzung des technischen Systems eine ausgiebige Untersuchung, ob die Planung auch den Vorgaben entspricht.

Neben der tatsächlichen Realisierung gibt es Mechanismen zur Anpassung bzw. Auslegung eines bestehenden technischen Systems. Gerade der Betrieb eine technischen Anlage, z.B. einer Fertigungsstraße oder einer Trinkwasserversorgungsanlage, hat unter bestimmten Restriktionen möglichst optimal zu erfolgen: Bei der Fertigungsstraße sollen Produkte zu niedrigen Kosten mit hoher Qualität entstehen, die Trinkwasseranlage soll zu geringen Kosten betrieben werden, wobei insbesondere zeitabhängige Stromtarife und zeitabhängige Verbrauchsspitzen möglichst im Voraus zu berücksichtigen sind.

Bekanntermaßen werden die Einstellungen von hochspezialisierten Fachleuten, im Falle der Trinkwasseranlage von sogenannten "Dispatchern" (Wassermeister), vorgenommen, deren umfangreiches Wissen über den Ablauf der Trinkwasseranlage wesentlich Einfluß nimmt. Dabei ist es von Nachteil, daß manuelle Einstellungen generell - trotz noch so detaillierten Expertenwissens - fehlerhaft sein können bzw. im Vergleich zur automatisierten Einstellung stets langsamer sind.

Aus der internationalen Anmeldung WO 98/12612 ist ein Verfahren zum Entwurf oder zur Steuerung des Prozessablaufs einer Anlage der Grundstoffindustrie bekannt, bei dem Entscheidungsgrößen über den Prozessablauf mittels eines mathematischen Optimierungsalgorithmus optimiert werden, der die Entscheidungsgrößen über den Prozessablauf auf der Basis eines Prozessmodells optimiert, bei dem das Prozessmodell auf zwei Modellebenen, eine übergeordnete Modellebene und eine untere Modellebene verteilt wird, wobei die untere Modellebene Teilmodelle aufweist, die durch zumindest ein Modell auf der übergeordneten Modellebene verknüpft werdem und bei dem die Teilmodelle Differentialgleichungssysteme, neuronale Netze, Finite-Elemente-Modelle, Fuzzy-Modelle oder regelbasierte Modelle sind.

Die Aufgabe der Erfindung besteht darin, eine einfache Modellierung eines technischen Systems zu ermöglichen, wobei anhand der Modellierung Maßnahmen hinsichtlich des Entwurfs, der Planung oder der Steuerung des technischen Systems möglich werden.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Modellierung eines technischen Systems angegeben, bei dem als Teil des technischen Systems mindestens eine (funktionale) Komponente identifiziert wird. Die mindestens eine Komponente wird auf mindestens ein Modul abgebildet, wobei das Modul ein technisches Objekt und eine Abbildung dieses Objekts in eine mathematische Beschreibung umfaßt. Die mindestens eine Komponente wird erzeugt (generiert, instanziiert), indem das mindestens eine Modul der Komponente erzeugt wird. Durch die Erzeugung des mindestens einen Moduls wird eine globale mathematische Beschreibung des technischen Systems erstellt, die sich aus der mathematischen Beschreibung jedes Moduls unter Berücksichtigung einer Verbindung der Module untereinander ergibt. Die globale mathematische Beschreibung stellt die Modellierung des technischen Systems dar.

Es ist ein Vorteil des beschriebenen Verfahrens, daß automatisch eine Modellierung des technischen Systems erfolgt, indem eine funktionale Zerlegung in Komponenten vorgenommen wird, welche Komponenten wiederum in funktionale Untereinheiten, sogenannten Module, unterteilt werden, und die mathematischen Beschreibungen der Module zu einer Gesamtheit, der globalen mathematischen Beschreibung, zusammenwirken.

Im Rahmen einer Weiterbildung wird das globale mathematische Modell hinsichtlich vorgegebener Restriktionen optimiert, indem mittels eines vorgebbaren Lösungsprogramms ein Ergebnis ermittelt wird. Dieses Ergebnis entspricht einer optimierten Lösung der globalen mathematischen Beschreibung unter Berücksichtigung der erwähnten Restriktion (auch: Nebenbedingung).

Eine Weiterbildung besteht darin, daß das Verfahren zum Entwurf eines (realen) technischen Systems eingesetzt wird. Insbesondere kann der Entwurf des technischen Systems einen Neuentwurf oder eine Anpassung eines bereits bestehenden Systems umfassen. Im ersten Fall wird im Rahmen der Modellierung das technische System neu entworfen und vorzugsweise nach Maßgabe dieses Entwurfs realisiert. Im zweiten Fall (Anpassung) wird insbesondere ein bereits bestehendes System derart "entworfen", daß die Steuerung bzw. die Durchführung dieses Systems entsprechend der Maßgabe des vorliegenden Verfahrens durchgeführt wird.

Eine andere Weiterbildung besteht darin, daß oben genanntes technisches Objekt durch seine Eigenschaften in Form der mathematischen Beschreibung dargestellt wird.

Auch ist es eine Weiterbildung, daß in dem Modul zeitlich veränderliche Größen beschrieben werden. Vorzugsweise werden diese zeitlich veränderlichen Größen durch stückweise konstante oder stückweise lineare Funktionen beschrieben. Für eine Modellierung wird ein Anteil eines Zeitintervalls, in dem ein bestimmter Wert angenommen wird, als eine Modellvariable verwendet.

Eine Ausgestaltung besteht darin, daß für jedes Modul Beschreibungen für verschiedene Modelle verfügbar sind. Dadurch kann für jede Anlage ein passendes Modell ermittelt werden, das für jedes Modul über eine Beschreibung verfügt.

Insbesondere können mehrere Typen mathematischer Beschreibungen verfügbar sind. Dabei ist die globale mathematische Beschreibung von dem Typ, der in den mathematischen Beschreibungen aller beteiliger Module gleichermaßen verfügbar ist. Ferner können die Typen hierarchisch vorsortiert sein, so daß automatisch die globale mathematische Beschreibung von dem Typ sein kann, der entsprechend der Sortierung bevorzugt werden soll.

Oben genannte Restriktion (Nebenbedingung) kann eine der folgenden Möglichkeiten sein:

a) technische Restriktion:

Bei der Modellierung von physikalischen Zusammenhängen, Schaltvorgängen oder anderen technischen Restriktionen werden die möglichen Werte von Variablen, bzw. die möglichen Kombinationen der Variablen, eingeschränkt.

b) vorgegebene Kosten:

Ein wichtiger Faktor bei der Optimierung des technischen Systems sind die Kosten für den Betrieb bzw. die Herstellung eines gewünschten Erzeugnisses. Diese können auf verschiede Art und Weise formuliert werden und somit dem System in Form einer Restriktion übergeben werden.

c) Berücksichtigung von Umweltbedingungen:

Auch von Bedeutung ist der Einfluß der Umwelt auf das technische System bzw. der Einfluß des technischen Systems auf die Umwelt. Hier können vielerlei Bedingungen an ein technisches System geknüpft sein, die es im Rahmen des Entwurfs zu berücksichtigen gilt.

Als zusätzliche Ausgestaltung werden Typen für mathematische Beschreibungen genannten:

a) Lineare Optimierung (LP);
b) Netzwerkflußprobleme (MCF);
c) Gemischt ganzzahlige lineare Programme (GLP).

Jeder einzelne Typ wird weiter unten detailliert erläutert.

Auch ist es eine Weiterbildung, daß für jedes Modul zumindest eine mathematische Beschreibung vom Typ "Gemischt ganzzahlige lineare Programme (GLP)" verfügbar ist.

Zur Lösung der Aufgabe wird ferner eine Anordnung zur Modellierung eines technischen Systems angegeben, die eine Prozessoreinheit aufweist, die derart eingerichtet ist, daß

a) als Teil des technischen Systems mindestens eine Komponente identifizierbar ist;
b) jede Komponente auf mindestens ein Modul abbildbar ist, wobei jedes Modul ein technisches Objekt und eine Abbildung dieses Objekts in eine mathematische Beschreibung umfaßt;
c) die mindestens eine Komponenten erzeugbar ist, indem das mindestens eine Modul der Komponente erzeugt wird;
d) durch Erzeugung des mindestens einen Moduls eine globale mathematische Beschreibung des technischen Systems erstellbar ist, die sich aus der mathematischen Beschreibung jedes Moduls und der Verbindung der Module untereinander ergibt;
e) die globale mathematische Beschreibung die Modellierung des technischen Systems ergibt.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig.1    eine Skizze mit hierarchisch geordneten Möglichkeiten mathematischer Beschreibungen;

Fig.2    eine graphische Darstellung einer Lösungsmenge, die mittels linearer Optimierung bestimmt wird;

Fig.3       eine Skizze eines Flußmodells;

Fig.4       eine Skizze zur Veranschaulichung der Lösung einer NLP-Beschreibung;

Fig.5       eine Skizze zur Veranschaulichung der Lösung einer GLP-Beschreibung;

Fig.6       eine Skizze, die Möglichkeiten einer Fallunterscheidung im Rahmen einer Suche nach einer optimalen Lösung einer GLP-Beschreibung darstellt;

Fig.7       eine Skizze zur Veranschaulichung eines Schnittebenen-Verfahrens;

Fig.8       eine Skizze eines Tankmodells;

Fig.9       eine Skizze eines Trinkwassernetzes in Komponentenstruktur;

Fig.10      eine Skizze, die eine Modulstruktur des Trinkwassernetzes aus Fig.9 darstellt;

Fig.11      eine Skizze, die eine Anordnung aus drei Behältern, die über Ventile miteinander verbunden sind, darstellt;

Fig.12      eine Skizze, die mögliche Werte für den Durchfluß unter Berücksichtigung des Torricelligesetzes aufzeigt;

Fig.13      eine Skizze, die ein Referenzmodell für Mischbehälter darstellt;

Fig.14      eine Skizze, die eine Modulstruktur des Dreitankbeispiels aus Figur 11 zeigt;

Fig.15      ein Blockdiagramm, das Schritte eines Verfahrens zur Modellierung eines technischen Systems darstellt;

Fig.16      eine Prozessoreinheit.

## MATHEMATISCHE BESCHREIBUNGEN - ÜBERBLICK

Optimierungsaufgaben spielen in weiten Bereichen der Industrie eine bedeutende Rolle. Dabei soll aus einer Vielzahl möglicher Lösungen diejenige Lösung bestimmt werden, die unter vorgegebenen Bedingungen (auch: Nebenbedingungen) die beste (optimale) Lösung, darstellt.

Zur Lösung einer Optimierungsaufgabe werden eine mathematische Beschreibung aller möglichen (zulässigen) Lösungen und eine Gütefunktion (auch: Zielfunktion) bestimmt, welche Gütefunktion jeder Lösung einen Wert zuordnet.

Zur Beschreibung möglicher Lösungen werden insbesondere Variablen, Parameter, Nebenbedingungen und mathematische Beziehungen berücksichtigt. Variablen werden unterschieden nach kontinuierlichen Größen (z.B. reelle Zahl zwischen 0 und 1) und diskreten Größen (z.B. wahr oder falsch, 0 oder 1, ganze Zahl). Ein Einsatz von Parametern erlaubt es, eine Modellierung zu verallgemeinern: So kann bei einem Modell zur Beschreibung eines Betriebsplans in einer Trinkwasseranlage (auch: Wassernetz) das maximale Volumen eines Behälters der Trinkwasseranlage als Parameter verwendet werden. Nebenbedingungen und mathematische Beziehungen sind beispielsweise Ungleichungen, Gleichungen oder logische Bedingungen (z.B. wenn Variable x wahr ist, dann gilt: Variable y=0).

Bei der Optimierung sollen nun zu gegebenen Parametern die Variablen so bestimmt werden, daß

-    die Gütefunktion einen größt- bzw. kleinstmöglichen Wert (je nach Vorgabe) annimmt und
-    alle vorgegebenen Bedingungen (Nebenbedingungen, Restriktionen) eingehalten werden.

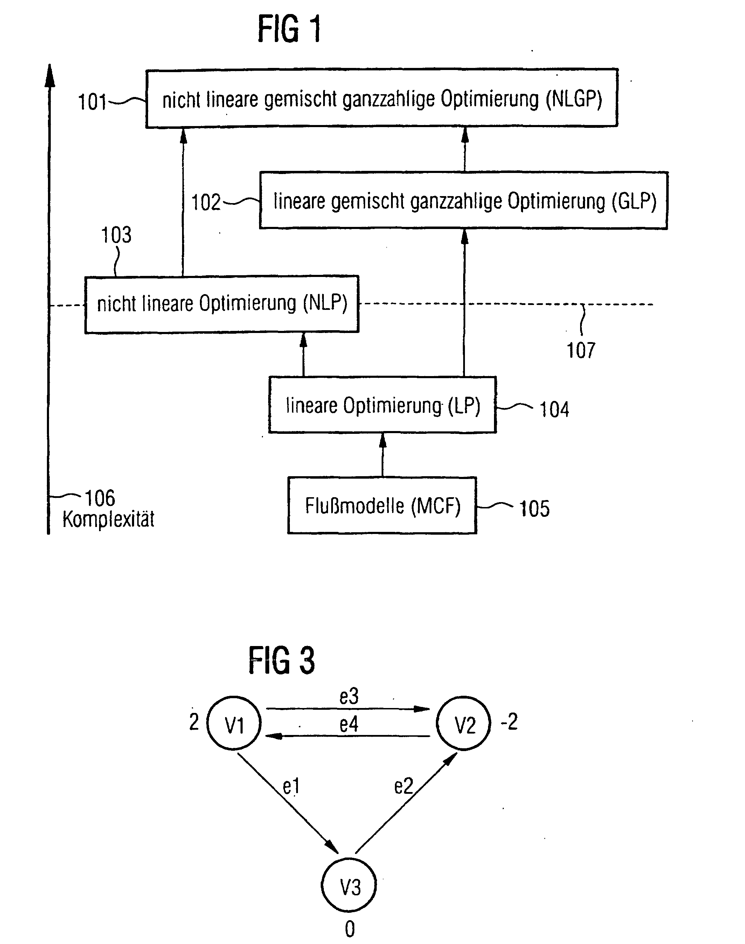

In **Fig.1** ist eine Skizze mit hierarchisch geordneten Möglichkeiten mathematischer Beschreibungen dargestellt. Ein Block 101 zeigt eine mathematische Beschreibung in Form "nichtlinearer gemischt ganzzahliger Optimierung", abgekürzt NLGP. Ein Block 102, von dem aus ein Pfeil zu dem Block 101 zeigt, beinhaltet eine mathematische Beschreibung "lineare gemischt ganzzahlige Optimierung", GLP. Durch einen Block 103, von dem aus ein Pfeil zu dem Block 101 geht, wird die mathematische Beschreibung "nichtlineare Optimierung", abgekürzt NLP, benannt. Von einem Block 104 aus geht ein Pfeil zu dem Block 103 und ein anderer Pfeil zu dem Block 102. In dem Block 104 ist die mathematische Beschreibung "lineare Optimierung", LP, bezeichnet. Schließlich ist ein Block 105 gezeigt, der die mathematische Beschreibung "Flußmodelle", kurz MCF, benennt und von dem aus ein Pfeil zu dem Block 104 zeigt.

Die Richtung der Pfeile in Fig.1 gibt die Richtung einer Verallgemeinerung mathematischer Beschreibungen an. So ist jede GLP auch eine NLGP. Eine Pfadlänge in Pfeilrichtung kennzeichnet die Mächtigkeit der zugehörigen mathematischen Beschreibung: Bei NLGP können kontinuierliche und diskrete Variablen und bei der Formulierungen von Kostenfunktion und Nebenbedingungen "beliebige" (Un)Gleichungen verwendet werden; bei GLP hingegen sind nur Nebenbedingungen in Form linearer Gleichungen zulässig; auch die Kostenfunktion ist vorzugsweise linear. Ohne diskrete Variablen, aber mit nichtlinearen Funktionen ergibt sich bei der Modellierung der Kostenfunktion oder der Nebenbedingungen, die NLP. Eine Beschränkung auf kontinuierliche Variablen und lineare Funktionen ergibt die LP. Ein MCF entspricht einer speziellen LP.

Beim Lösung umfangreicher mathematischer Beschreibungen sind oftmals entweder im Hinblick auf die Laufzeit für die Lösung oder im Rahmen der Genauigkeit Kompromisse zu schließen. Eine Schranke stellt unter Berücksichtigung der steigenden Komplexität 106 eine waagerechte Linie 107 in Fig.1 dar. Oberhalb dieser Linie 107 ist i.d. R. eine optimale Lösung in akzeptabler Rechenzeit noch nicht bzw. nur mit gewaltigem Rechenaufwand zu erzielen.

Für MCF, LP und für "gutartige" (also effizient lösbare) NLP sowohl kommerziell (CPLEX, siehe [4]) als auch nichtkommerziell (SOPLEX, siehe [5]) leistungsstarke Lösungsprogramme, sog. "Solver", erhältlich, die optimale Lösungen mit garantierten Laufzeiten berechnen. Damit ist nicht generell gesagt, daß nicht auch spezielle GLP-Probleme in Sekundenschnelle optimal zu lösen seien. Vielmehr ist von Problem zu Problem zu prüfen, ob eine optimale Lösung in akzeptabler Zeit gefunden werden kann. Ist dies nicht der Fall, so müssen Alternativen eruiert werden, um für das vorliegende Problem schnell eine (qualitativ) ausreichende Lösung zu finden. Ein Verfahren, das nach ausreichend guten, nicht notwendigerweise optimalen, Lösungen sucht, bezeichnet man als Heuristik.

Sind alle Beziehungen und (Neben-)Bedingungen als lineare Gleichungen oder Ungleichungen zwischen kontinuierlichen Variablen formulierbar und ist die Kostenfunktion selbst linear, so handelt es sich um eine mathematische Beschreibung vom Typ LP (lineare Optimierung, vgl. Block 104). Sind zusätzlich diskrete Variablen, z.B. Schaltzustände von Aggregaten, zu berücksichtigen, so liegt der Typ GLP (vgl. Block 102) vor. Auch für diesen Typ GLP sind leistungsfähige Lösungsprogramme (z.B. CPLEX, LINDO) erhältlich. Allerdings haben diese eine exponentielles Laufzeitverhalten, die Zeit für Erhalt der Lösung hängt stark von dem Umfang der GLP-Beschreibung ab. Beispielsweise kann eine nur unwesentliche Erweiterung der GLP-Beschreibung zu doppelter Laufzeit führen.

LINEARE OPTIMIERUNG (LP)

Als ein lineares Programm bezeichnet man folgenden Typ von Optimierungsproblemen:

$$\min(\max)\Sigma\, c_i x_i \tag{1}$$

$$r_j : : \sum a_{ij} x_i \begin{Bmatrix} \leq \\ = \\ \geq \end{Bmatrix} b_j$$

Gesucht wird eine Menge reeller Zahlen $x_i$ mit der Eigenschaft, daß alle (Neben-)Bedingungen (Restriktionen) $r_j$ erfüllt sind und daß $\Sigma\, c_i x_i$ minimiert (bzw. maximiert) wird. Hierbei können die Bedingungen in Form von Gleichungen und/oder Ungleichungen vorliegen. $c = (c_1,...,c_n)$ heißt Kostenvektor.

Für die weiteren Ausführungen ist es hilfreich, anhand eines einfachen Beispiels eine grafische Interpretation der linearen Programmierung zu beschreiben. Eine Ungleichung mit zwei Variablen kann als eine Halbebene dargestellt werden. Ein System von Ungleichungen mit jeweils zwei Variablen hat deshalb entweder keine Lösung oder aber die Lösungsmenge wird durch ein Vieleck begrenzt. Bei einer linearen Zielfunktion, also wenn der Wert der Zielfunktion in der Ebene einer Geraden entspricht, reicht es aus, nur die Ecken des Vielecks zu betrachten: Es werden die Koordinaten der Eckpunkte in die Zielfunktion eingesetzt und geprüft, welcher dieser Werte zu dem gewünschten Minimalbzw. Maximalwert führt.

BEISPIEL 1:

Dieses Vorgehen wird an einem konkreten Beispiel aus der Produktionstechnik erläutert.
In einer Pumpenfirma werden für eine Endmontage zweier verschiedener Pumpentypen P1, P2 zwei Maschinen M1, M2 und zwei Montagestraßen MS1, MS2 benötigt. Die erste Restriktion liefert die Maschine M1. Pro Tag können 30 Pumpen des Typs P1 oder 50 Pumpen des Typs P2 oder eine entsprechende Kombination Pumpen P1 und P2 bearbeitet/hergestellt werden. Für die Pumpe P1 wird also 1/30 der Kapazität der Maschine M1 beansprucht, entsprechend wird für die Pumpe P2 1/50 der Kapazität benötigt.

Die gesamte Kapazität der Maschine M1 ist gegeben durch:

$$r_1 :: \frac{x_1}{30} + \frac{x_2}{50} \leq 1 \qquad \text{oder} \qquad 5x_1 + 3x_2 \leq 150 \tag{2}$$

Mit der Maschine M2 können 40 Pumpen des Typs P1 oder 40 Pumpen des Typs P2 oder eine entsprechende Kombination bearbeitet werden. Dies bedeutet:

$$r_2 :: \frac{x_1}{40} + \frac{x_2}{40} \leq 1 \qquad \text{oder} \qquad x_1 + x_2 \leq 40 \tag{3}$$

Auf der ersten Montagestraße MS1 können maximal 25 Pumpen vom Typ P1 und auf der zweiten Montagestraße maximal 30 Pumpen vom Typ P2 bearbeitet werden. Negative Mengen können nicht produziert werden. Es gilt also:

$$0 \leq x_1 \leq 25 \qquad 0 \leq x_2 \leq 30 \tag{4}$$

Für den Typ P1 läßt sich ein Preis von 4 Einheiten erzielen, Pumpen des Typs P2 lassen sich für 12 Einheiten verkaufen. Ein Produktionswert z von $x_1$ Pumpen P1 und $x_2$ Pumpen P2 beträgt also:

$$z = 4x_1 + 12x_2 \tag{5}$$

Das Ziel (Kostenfunktion, Zielfunktion) besteht darin, den Produktionswert zu maximieren. Damit stellt sich die Optimierungsaufgabe mathematisch in folgender Form dar:

$$
\begin{aligned}
\max\ & 4x_1 + 12x_2 \\
r_1 :: \ & 5x_1 + 3x_2 \leq 150 \\
r_2 :: \ & x_1 + x_2 \leq 40 \\
r_3 :: \ & x_1 \leq 25 \\
r_4 :: \ & x_2 \leq 30 \\
r_5 :: \ & x_1 \geq 0 \\
r_6 :: \ & x_2 \geq 0
\end{aligned}
\tag{6}
$$

LÖSUNGSMENGE:

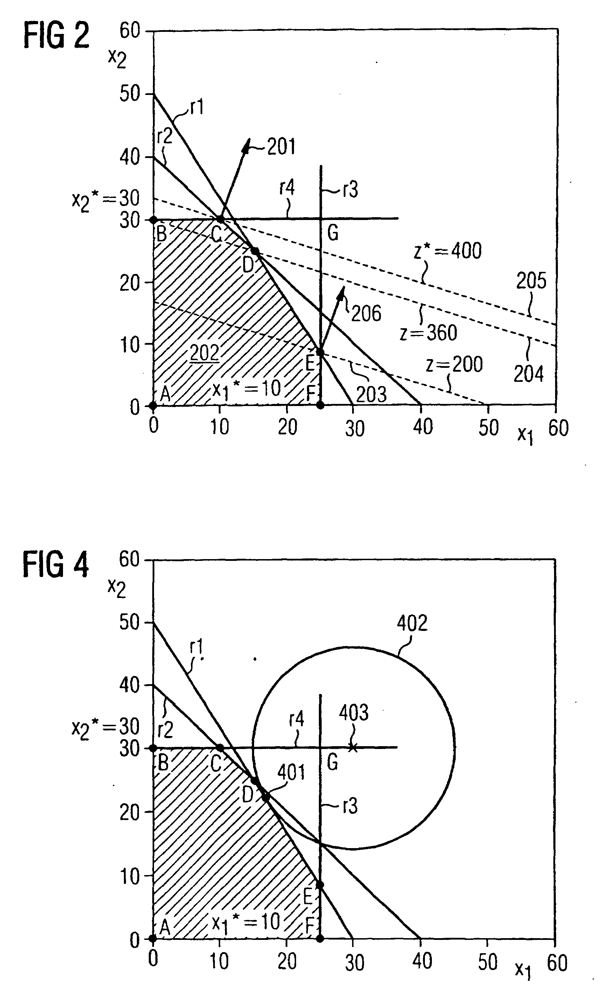

Eine Lösungsmenge, also die Menge aller Punkte die den Ungleichungen $r_1,...,r_6$ genügt (vgl. Gleichung (6)), läßt sich graphisch darstellen (vgl. **Fig.2**). Die Ungleichungen $r_3,...,r_6$ beschreiben zusammen ein Rechteck ABGF. Aus dem Schnitt des Rechtecks mit den beiden restlichen Halbebenen ergibt sich das Vieleck ABCDEF 202.

Die Ungleichungen (6) sind als durchgezogene Linien in Fig.2 eingetragen. Die Punkte im $x_1,x_2$-Raum, die allen Nebenbedingungen ri genügen, entsprechen dem Vieleck ABCDEF 202. Der Vektor c=(4,14) 201 kennzeichnet die Richtung der Kostenfunktion. Ausgehend von Punkt C ergibt sich in Richtung des Vektors c 201 der maximale Anstieg der Kosten.

Betrachtet man die Ungleichung (5), so ergibt sich für jeden Wert von z eine Gerade. Dargestellt wurden die Geraden für z=200 (Bezugszeichen 203), z=360 (Bezugszeichen 204) und z*=400 (Bezugszeichen 205). Oberhalb der Geraden 203, 204 und 205 liegen diejenigen Punkte, deren Gewinn höher als z* ist. Dabei ergibt sich, daß der Punkt C optimal ist, da alle Punkte mit höherem Gewinn über der Geraden mit z=400 und alle zulässigen Punkte unterhalb oder auf der Geraden liegen. Die Koordinaten von C stellen also die optimale Lösung und z* das Optimum dar. Die Koordinaten lassen sich graphisch ablesen oder als Schnittpunkt der beiden Begrenzungsgeraden zu $x_1^*$ = 10, $x_2^*$ = 30 ermitteln.

Um die Grundidee eines sogenannten Simplex-Verfahrens (auch: Simplex-Algorithmus) zu veranschaulichen, wird nachfolgend von Punkt E ausgegangen. Eine direkte Verbesserung in Richtung der Kostenfunktion, angedeutet durch den Pfeil 206, ist wegen der Restriktionen nicht möglich: Der Bereich zulässiger Punkte 202 würde verlassen. Am Verlauf der Hilfsgeraden 200 = $4x_1 + 12x_2$ (siehe Bezeichnung 203) wird deutlich, daß eine Verbesserung (der Zielfunktion) erfolgt, wenn entlang der Restriktion $r_1$ in Richtung zu dem Punkt D verfahren wird. An Punkt D erzwingt die Bedingung $r_2$ eine neue Richtung zu dem Punkt C. Auch entlang des neuen Kurses erfolgt eine Verbesserung des Zielwertes. An Punkt C ist das Optimum, die optimale Lösung, erreicht. Eine weitere Verbesserung ist nicht möglich, da die Bedingungen $r_2$ und $r_4$ eine Bewegung entlang einer gewinnverbessernden Richtung nicht zulassen.

Mit den optimalen Werten für $x_1$ und $x_2$ lassen sich die Maschinenauslastungen bestimmen: Während die Maschine M2 vollständig (100%) ausgelastet ist, beträgt der Auslastungsgrad von Maschine M1 nur 93,3%. Die Auslastung der Montagestraße MS1 liegt bei 40%, die der Montagestraße MS2 bei 100%.

Die gewinnoptimale Lösung schöpft die Produktionskapazität der Firma also nicht voll aus. Von Interesse ist auch die Lösung des Problems unter dem Gesichtspunkt der maximalen Produktion

$$\text{Zielfunktion: } \max\left(x_1 + x_2\right) \qquad\qquad (7)$$

Die Bestimmung der optimalen Lösung erfolgt analog zu oben beschriebenem Verfahren: Lediglich die Zielfunktion unterscheidet sich vom vorhergehenden Beispiel. Die optimale Lösung dieses neuen Problems weist mehrere Besonderheiten auf:

a) Die Lösung ist nicht eindeutig: Alle Punkte der Kante CD sind optimal;
b) In dem Punkt C ist der Produktionswert optimal;
c) In dem Punkt D beträgt die Auslastung jeder Maschine 100%.

Das Beispiel zeigt deutlich, daß bei der Festlegung der Zielfunktion sorgfältig vorgegangen werden muß.

Im mehrdimensionalen Raum (hier $x_1,x_2$-Raum) beschreiben Ungleichungen Halbräume (hier: Halbebenen). Der Schnitt von Halbräumen heißt allgemein Polyeder. Auch im mehrdimensionalen Raum lassen sich beschränkte Polyeder als eine Konvexkombination von (Eck-)Punkten darstellen.

Bei Betrachtung beliebiger Schnitte von Halbräumen ergeben sich drei unterschiedliche Fälle:

a) Ist der Schnitt leer, so gibt es keine Lösung für das Optimierungsproblem.
b) Ist der Schritt in Richtung der Kostenfunktion nicht beschränkt, so kann kein Optimum gefunden werden (z.B. max x unter $x \geq 0$).
c) Ist der Schnitt nicht leer und beschränkt, so wird das Optimum in einer Ecke angenommen.

Um dieses Optimum zu finden werden in der Praxis insbesondere zwei Verfahren angewendet.

a) Bei dem **Simplex-Verfahren** startet man in einer Ecke und prüft dort lokal, ob eine Verbesserung möglich ist. Ist dies der Fall, so folgt man dieser Richtung, bis eine neue Ungleichung wirkt. Dieses Verfahren entspricht dem Vorgehen, welches bei obigem Beispiel verwendet wurde.
b) Bei einem sogenannten **"Inneren-Punkt-Verfahren"** werden die Ränder des Polyeders gemieden. Hierzu werden Straf-Funktionen eingeführt, die eine Annäherung an den Rand des Polyeders mit einem Strafwert versehen. Damit wird schrittweise aus dem Inneren des Polyeders die optimale Ecke gesucht.

Beide Verfahren werden als kommerzielle Solver angeboten (z.B. CPLEX).

FLUßMODELLE (MCF)

Ein MCF kann als spezielles lineares Programm aufgefaßt werden. Diese Programme haben die Form:

$$\min \sum c_i x_i$$

$$v_j :: \sum_{i \in S_j} x_i - \sum_{i \in T_j} x_i = b_j \qquad (8).$$

$$e_i :: l_i \leq x_i \leq u_i$$

Die Gleichungen $v_j$ entsprechen Bilanzgleichungen. Jede Variable $x_i$ tritt genau in einer Gleichung $v_j$ mit positivem Vorzeichen (+1) und in einer Gleichung $v_k$ mit negativem Vorzeichen (-1) auf. Außerdem können für alle Variablen obere und untere Schranken vorgegeben werden.

BEISPIEL 2:

$$\min x_1 + x_2 + x_3 + x_4$$

$$
\begin{aligned}
v_1 :: \quad & x_1 + x_3 - x_4 && = && 2 \\
v_2 :: \quad & x_2 - x_3 + x_4 && = && -2 \\
v_3 :: \quad & -x_1 + x_2 && = && 0
\end{aligned}
\qquad (9).
$$

$$e_i :: 0 \leq x_i \leq 1$$

Anschaulich entsprechen die Gleichungen $v_j$ der MCF Knoten. Zwischen diesen Knoten verlaufen gerichtete Kanten $e_i$ von dem Knoten, bei dem die Variable mit positivem Vorzeichen auftritt, zu dem Knoten, bei dem sie mit negativem Vorzeichen auftritt. Die Variable $x_i$ wird als Fluß über die Kante $e_i$ interpretiert. Damit entsteht eine Flußgraph wie in Fig.3 gezeigt.

Ausgehend von der Gleichung $v_1$ (siehe Gleichungssystem (9))

$$x_1 + x_3 - x_4 = 2$$

beschreibt $x_1 + x_3 - x_4$ die Flußbilanz an dem Knoten $v_1$. Durch die rechte Seite der Gleichung wird bewirkt, daß zwei Einheiten mehr aus $v_1$ heraus als in $v_1$ hinein fließen. Zusammen mit den Gleichungen $v_2$ und $v_3$ wird demnach ein Fluß

$$x = (x_1, x_2, x_3, x_4) \qquad (10)$$

beschrieben, durch den zwei Einheiten von $v_1$ nach $v_2$ fließen. Die Gleichungen $e_i$ in (9) entsprechen Kapazitätsbedingungen für den Fluß auf den Kanten.

Die einzige und damit optimale Lösung für obiges Optimierungsproblem ist

$$x_1 = x_2 = x_3 = 1 \qquad \text{und} \qquad x_4 = 0 \qquad (11).$$

Die begrenzte Kapazität der Kanten erzwingt eine Ausnutzung der beiden möglichen Wege

$$v_1 \rightarrow e_3 \rightarrow v_2 \qquad \text{und} \qquad v_1 \rightarrow e_1 \rightarrow v_3 \rightarrow e_2 \rightarrow v_2$$

bis zu deren Kapazitätsgrenzen.

Trotz ihrer speziellen Struktur treten MCFs häufig in der Praxis auf.

NICHTLINEARE PROGRAMME (NLP)

Nichtlineare Programme stellen eine Verallgemeinerung der linearen Programme dar:

$$\min C(x_1, \ldots, x_n)$$

$$h_j :: H_j(x_1, \ldots, x_n) = b_j \qquad\qquad (12).$$

$$g_j :: G_j(x_1, \ldots, x_n) \leq b_j$$

Die lineare Zielfunktion und die (Neben-)Bedingungen werden durch allgemeine (nichtlineare) Funktionen ersetzt.

Effiziente Verfahren zur Lösung einer NLP-Beschreibung existieren für verschiedene spezielle Situationen. Effiziente Verfahren zur Berechnung eines globalen Optimums erfordern allerdings eine Gutartigkeit des Problems, d. h. Lösungen, die durch leichte Veränderung keine Verbesserung ergeben, werden bereits als global optimal angenommen. Eine Klasse von Problemen, bei denen diese Voraussetzung erfüllt ist, sind konvexe Probleme. Hierbei sind folgende Eigenschaften Voraussetzung:

a) Wenn $x = (x_1, \ldots, x_n)$ und
$y = (y_1, \ldots, y_n)$
jeweils allen Nebenbedingungen genügen, dann muß auch

$$z = (1/2\, x_1 + 1/2 y_1, \ldots, 1/2\, x_n + 1/2 y_n)$$

allen Nebenbedingungen genügen.

b) Außerdem muß bei einem Minimierungsproblem

$$1/2\, C(x) + 1/2\, C(y) \geq C(z)$$

gelten.

Die erste Bedingung 'a)' ist insbesondere dann erfüllt, wenn alle Nebenbedingungen linear sind. Die zweite Bedingung 'b)' gilt immer bei linearen Zielfunktionen.

BEISPIEL 3:

Ausgehend von Beispiel 1 wird nachfolgend die Kostenfunktion geändert: Durch einen externen Gutachter wurde der Firma vorgeschlagen - innerhalb der bekannten Restriktionen - möglichst 30 Pumpen von jedem Typ zu produzieren. Gesucht wird damit ein Betriebspunkt, der möglichst nahe an dem Punkt (30,30) im $x_1, x_2$-Raum liegt. Dieses führt zu folgendem Optimierungsproblem:

$$\min (x_1 - 30)^2 + (x_2 - 30)^2$$

$$\text{oder}$$

$$\min \| (x_1 - 30, x_2 - 30) \|_2$$

$$r_1 :: 5x_1 + 3x_2 \leq 150$$
$$r_2 :: x_1 + x_2 \leq 40$$
$$r_3 :: x_1 \leq 25$$
$$r_4 :: x_2 \leq 30$$
$$r_5 :: x_1 \geq 0$$
$$r_6 :: x_2 \geq 0 \qquad (13)$$

Graphisch entspricht dieses Problem der Aufgabe, innerhalb des Lösungsgebietes den Punkt zu finden, der am nächsten an den Koordinaten (30,30) liegt. In Fig.4 ist die Lösung 401 dargestellt.

Der optimale Punkt 401 liegt hier bei den Koordinaten (16.76, 22.06). Graphisch liegen im Inneren eines Kreises 402 diejenigen Punkte, die näher an den Koordinaten (30,30), eingezeichnet als Punkt 403, liegen. Damit ist durch Figur der optimale Charakter der Lösung veranschaulicht. Allgemein ist nicht notwendigerweise zur folgern, daß ein Punkt mit den Koordinaten (16,22) die beste ganzzahlige Lösung ist. Um die optimalen ganzzahlige Lösung zu ermitteln, müßte eine NLGP-Beschreibung eingesetzt werden.

Zur Lösung nichtlinearer Optimierungsprobleme gibt es eine Vielzahl von Verfahren: "Barrieremethoden" überführen ein NLP-Problem in ein unbeschränktes Optimierungsproblem (ohne Nebenbedingungen) oder eine Sequenz von unbeschränkten Optimierungsproblemen. Sind alle Nebenbedingung linear, so können auch Gradientenprojektionsverfahren eingesetzt werden. Bei anderen Ansätzen werden sukzessiv quadratische Programme gelöst (vergleiche [1]).

Wenn die Konvexitätsbedingungen nicht erfüllt sind, müssen bei der Optimierung alle lokalen Optima gefunden und miteinander verglichen werden, um die beste Lösung zu finden. Gerade bei umfangreichen mathematischen Beschreibungen ist dies häufig nicht möglich. Für derartige Probleme sind Suchverfahren (z.B. Tabusearch, Simulated Annealing, Evolutionsverfahren) verfügbar, bei denen mit verschiedenen Strategien möglichst gute Lösungen gesucht werden können.

Auch für nichtlineare Optimierungsprobleme existieren eine Reihe von Lösungsprogrammen. Allerdings muß bei Auswahl des Lösungsprogramms und bei der Modellierung des realen technischen Systems genau auf die Problemspezifika eingegangen werden. So sollte für ein Problem - wie in Beispiel 3 - ein spezielles Lösungsprogramm für quadratische Optimierungsprobleme mit linearen Nebenbedingungen eingesetzt werden.

GEMISCHT GANZZAHLIGE LINEARE PROGRAMME (GLP)

Eine andere Verallgemeinerung linearer Programme wird durch Forderung nach Ganzzahligkeit der Variablen erreicht:

$$\min \sum c_i x_i$$

$$r_j :: \sum a_{ij} x_i + \sum a_{ij} y_i \begin{Bmatrix} \leq \\ = \\ \geq \end{Bmatrix} b_j \qquad (14).$$

$$x \in R, y \in Z$$

BEISPIEL 4:

Ausgegangen wird wieder von Beispiel 1. Optional können die Maschinen M1 und M2 auch so umgebaut werden, daß ihre Kapazität verdoppelt wird. Dieser Umbau verursacht aber Kapitalkosten in Höhe von 30 DM/Tag. Um den möglichen Umbau abzubilden, werden ganzzahlige Variablen $y_1$, $y_2$ eingeführt. Es ergibt sich das folgende Gleichungssystem:

$$\max 4x_1 + 12x_2 - 30y_1 - 30y_2 \qquad (15).$$

$$
\begin{array}{rlrcrcl}
r_1 & :: & 5x_1 + 3x_2 - 150y_1 & \leq & 150 \\
r_2 & :: & x_1 + x_2 - 40y_2 & \leq & 40 \\
r_3, r_5 & :: & 0 & \leq & x_1 & \leq & 25 \\
r_4, r_6 & :: & 0 & \leq & x_2 & \leq & 30 \\
r_7 & :: & y_1 & \in & \{0,1\} \\
r_8 & :: & y_2 & \in & \{0,1\}
\end{array}
$$

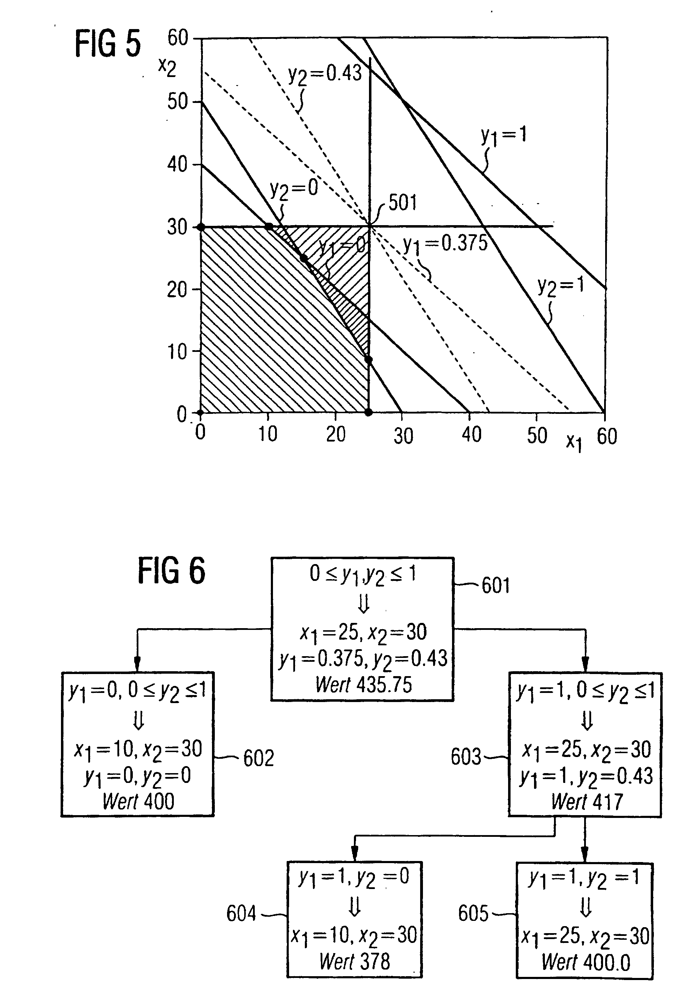

In Fig.5 ist der $x_1,x_2$-Raum zu obigem Beispiel dargestellt. Die Variablen $\{y_1,y_2\}$ führen in den Gleichungen $r_1$, $r_2$ zu einer Erhöhung der Kapazität. Graphisch läßt sich die Auswirkung des Umbaus als Verschiebung der Geraden $r_1$, $r_2$ interpretieren. Die Geraden werden soweit verschoben, daß sie in dem Optimierungsproblem keine Einschränkung mehr implizieren (siehe Fig.5: Geraden für $y_1$=1 und $y_2$=1).

Eine obere Schranke für den möglichen Gewinn wird bestimmt, indem die Bedingungen $r_7$, $r_8$ durch $0 \leq y_1 \leq 1$ und $0 \leq y_2 \leq 1$ ersetzt werden. Damit wird eine LP-Beschreibung erzielt. Diese LP-Beschreibung hat ihre optimale Lösung bei

$$x_1 = 25, \; x_2 = 30, \; y_1 = 0.375, \; y_2 = 0.43 \qquad (16)$$

mit dem Wert 435.75. Anschaulich entspricht dies der Verschiebung der Geraden derart, daß sie durch den Punkt 501 bei den Koordinaten (25,30) laufen. Der Ausbau der Maschinen wird also gerade soweit realisiert, bis die Kapazitäten der Montagestraßen erreicht wird.

Nun können gemäß Vorgabe die Variablen $y_1$ und $y_2$ nur ganzzahlig gewählt werden. Um die optimale ganzzahlige Lösung zu finden, werden die Fälle $y_1$=0 und $y_1$=1 gemäß Fig.6, ausgehend von einem Block 601, unterschieden.

Setzt man $y_1 = 0$ (vgl. Block 602), so ergibt sich in der LP-Beschreibung eine ganzzahlige Lösung: Die optimale Lösung besteht darin, daß $y_2 = 0$ gesetzt wird. Damit ergibt sich eine ganzzahlige Lösung mit Wert 400.

In einem Block 603 ist gezeigt, daß $y_1 = 1$ gesetzt und das zugehörige Optimum der LP-Beschreibung bei $y_2 = 0.43$ bestimmt wird. Der resultierende Wert 417 liegt höher als die beste bekannte ganzzahlige Lösung. Daher müssen die beiden möglichen Fälle $y_2 = 0$ und $y_2 = 1$ weiter untersucht werden.

Für $y_2 = 1$ (siehe Block 604) wird eine zweite optimale Lösung bestimmt (Wert: 378).

Für $y_2 = 0$ ergibt sich ein Wert von 400, der unter der besten bisher gefunden Lösung liegt. Selbst wenn weitere ganzzahlige Variablen existieren würden, wäre eine Suche nach weiteren Lösungen mit $y_1 = 1$ und $y_2 = 0$ überflüssig, da zusätzliche Einschränkungen eine immer weitergehende Verschlechterung ergeben würden.

Ergebnis: In Beispiel 4 müssen entweder beide Investitionen getätigt werden oder keine. Der Ausbau nur einer Maschine führt zu einer zu geringen Kapazitätssteigerung der Anlage.

Für die Lösung von gemischt ganzzahligen Problem sind verschiedene Verfahren verfügbar. Eine Übersicht findet sich u.a. in [2]. Hierbei wird zwischen exakten Verfahren und Heuristiken unterscheiden. Exakte Verfahren sind so konzipiert, daß sie die optimale Lösung suchen. Für diese Verfahren existieren keine Laufzeitschranken. Bricht man diese Verfahren ab, bevor die optimale Lösung gefunden wurde, so kann der Fall eintreten, daß noch keine brauchbare Lösung ermittelt wurde. Heuristiken suchen hingegen direkt nach einer möglichst guten - nicht notwendigerweise optimalen - Lösung. Bei allgemeinen GLP-Problemen kann auch das Finden einer zulässigen Lösung nicht garantiert werden, da die Entscheidung, ob es überhaupt eine zulässige Lösung gibt, schon mathematisch schwer zu erfassen ist.

Das bekannteste Verfahren für die exakte Lösung von GLPs ist das sogenannte Branch&Bound-Verfahren (siehe [1]). Dieses wurde auch zur Lösung obigen Beispiels 4 eingesetzt. Zunächst werden die ganzzahligen Variablen durch kontinuierliche Variablen ersetzt. Damit vergrößert man die Lösungsmenge und erhält eine LP-Beschreibung. Die optimale Lösung der LP-Beschreibung liefert bei Maximierungsproblemen eine obere Schranke (Bound) für den Zielwert. Gleichzeitig liefert jede bisher gefundene ganzzahlige Lösung eine untere Schranke. Ist die obere Schranke höher als die untere und ist die Lösung der LP nicht ganzzahlig, so wird der Lösungsraum geteilt. Hierzu verzweigt man z.B. indem man eine 0-1 Variable x wählt und die LP mit x=0 und x=1 betrachtet (Branching). So entsteht eine baumartige Zerlegung des Suchraumes, wie in Fig.6 dargestellt.

Ein andere Möglichkeit stellt ein Schnittebenen-Verfahren dar. Hier werden aus der Forderung nach Ganzzahligkeit und den Bedingungen (Restriktionen) neue Bedingungen abgeleitet, die das Problem weiter einschränken. Als Beispiel diene das folgende Optimierungsproblem:

$$\max 4y_1 + 5y_2$$
$$3y_1 + 2y_2 \leq 6$$
$$2y_1 + 3y_2 \leq 6 \qquad\qquad\qquad (17).$$
$$y_1, y_2 \geq 0$$
$$y_1, y_2 \quad \text{ganzzahlig}$$

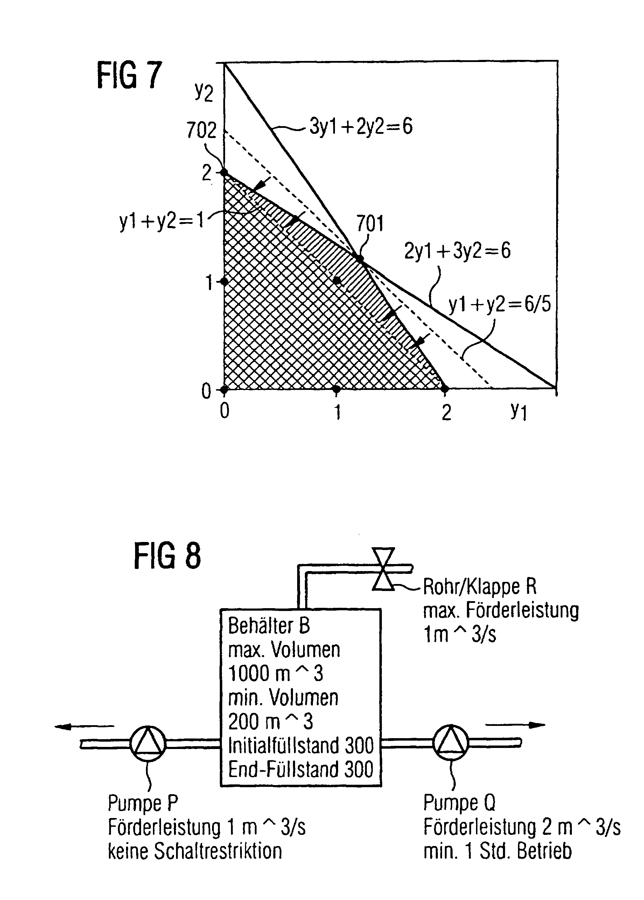

Durch Umgehen der Ganzzahligkeitsbedingungen ergibt sich ein lineares Optimierungsproblem mit einer optimalen Lösung (vgl. **Fig.7**) bei einem Punkt 701 mit den Koordinaten 6/5,6/5). Durch die Summieren der beiden Gleichungen folgt die Ungleichung

$$5y_1 + 5y_2 \leq 12 \qquad \text{bzw.} \qquad y_1 + y_2 \leq 2{,}4 \qquad\qquad (18).$$

Wegen der Forderung nach Ganzzahligkeit wird diese Ungleichung durch Abrunden "verschärft". Es gilt also

$$y_1 + y_2 \leq 2 \qquad\qquad (19).$$

Nun wird die Beschreibung um diese Nebenbedingung (19) ergänzt. Aus Fig.7 ergibt sich, daß hierdurch keine ganzzahligen Punkte aus der Lösungsmenge entfernt werden. Die Ecke 701 wird durch die neue Ungleichung "abgeschnitten". Wird nun die Lösung unter Vernachlässigung der Ganzzahligkeit berechnet, so folgt als optimale Lösung der Punkt 702 mit den Koordinaten (0,2). Diese Lösung 702 ist ganzzahlig und damit optimal.

Das Branch&Bound- und das Schnittebenen-Verfahren lassen sich kombinieren zu einem sogenannten Branch&Cut-Verfahren (vgl. Programmpaket ABACUS, siehe[3]).

MODELLIERUNG VON AUSLEGUNGS- BZW. PLANUNGSPROBLEMEN

Um die in den letzten Abschnitten vorgestellten mathematischen Beschreibungen für Energieoptimierungsprobleme einzusetzen, werden zeitliche Verläufe (z.B. Ganglinie eines Behälters, Fördermengen von Pumpen) auf Variablen abgebildet. Gleichzeitig werden Bedingungen (z.B. Kapazitätsgrenzen oder Schaltrestriktionen) in dem gewählten Modell beschrieben. Ist die Optimierung erfolgt, so werden in umgekehrter Richtung aus den Variablen des Modells zeitliche Verläufe berechnet werden. Hierbei können verschiedene Abbildungen gewählt werden. Nachfolgend werden zwei Methoden dafür näher erläutert.

BEISPIEL 5:

In **Fig.8** ist ein Tankmodell dargestellt, das ein Rohr R, einen Behälter B, eine Pumpe P und eine Pumpe Q umfaßt.

Dabei bezeichnen p(t), q(t), r(t) die Fördermengen der Pumpe P, der Pumpe Q und des Rohres R als Funktion der Zeit t und b(t) ein Volumen in dem Behälter B zum Zeitpunkt t. Damit werden zulässige Funktionen für ein Zeitintervall [0,T] wie folgt beschrieben:

A) Für alle t gilt p (t) $\in \{0,1\}$
B) Für alle t gilt $q(t) \in \{0,2\}$
C) Für alle t gilt $0 \le r(t) \le 1$
D) Für alle t gilt $200 \le b(t) \le 1000$,
$b(0) = 300, b(T) = 300$
E) Für alle t gilt $b(t) = r(t) - p(t) - q(t)$
F) Für alle $t_1 \le t_2 \le t_3$ mit $t_3 - t_1 \le 60 * 60$ gilt :
$\qquad q(t_1) = q(t_3) = 0 \Rightarrow q(t_2) = 0$

Die Bedingungen (A)-(D) sind selbsterklärend. In der Bedingung (E) wird der Zusammenhang zwischen Volumenänderung b(t) sowie Zuflüssen und Abflüssen beschrieben. Durch die Bedingung (F) wird erreicht, daß innerhalb eines Zeitintervalls von einer Stunde nicht zugleich ein Einschaltzeitpunkt und ein Abschaltzeitpunkt liegen. Damit liegt zwischen Ein- und Abschalten mindestens ein Zeitraum von einer Stunde. Analog sind auch Mindeststillstandszeiten formulierbar.

Es werden nachfolgend zwei Möglichkeiten der Abbildung auf Restriktionen eines GLP dargestellt. In beiden Fällen wird eine Zeitdiskretisierung

$$0 = t_0 \le \cdots \le t_n = T \qquad\qquad (20)$$

verwendet. Beispielhaft werde nachfolgend ein 30-Minuten-Raster angenommen.

GLP MODELLIERUNG 1:

Bei der ersten Abbildung werden die Flüsse r, p, q als stückweise konstante Funktionen modelliert. Dazu werden für diese Funktionen Variablen $r_i$ , $p_i$, $q_i$ mit i=0,..,n-1 eingeführt:

$$g) \qquad r(t) = r_i, p(t) = p_i, q(t) = q_i \text{ mit } t \in [t_i, t_{i+1}]$$

Für das Volumen b(t) werden die Variablen bi eingeführt. Da die Zu- und Abflüsse und damit die Volumenänderung in jedem Zeitintervall konstant sind, läßt sich das Volumen zu einem Zeitpunkt $t_i \le t \le t_{i+1}$ aus den Volumina $b_i$, $b_{i+1}$ zu den Zeitpunkten $t_i$, $t_{i+1}$ berechnen:

$$h) \qquad b(t) = \frac{b_i(t_{i+1} - t) + b_{i+1}(t - t_i)}{t_{i+1} - t_i} \qquad \text{für} \qquad t \in [t_i, t_{i+1}]$$

Damit ergeben sich die folgenden Nebenbedingungen für die GLP-Beschreibung:

a) $p_i \in \{0,1\}$
b) $q_i \in \{0,2\}$
c) $0 \le r_i \le 1$
d) $200 \le b_i \le 1000, b_0 = b(0) = 300 , b_n = b(T) = 300$
e) $b_{i+1} - b_i = 30 * 60 (r_i - p_i - q_i)$
f) Für alle $1 \le i \le n - 2 \qquad q_{i-1} = q_{i+1} = 0 \Rightarrow q_i = 0$

Die Bedingungen b) und f) entsprechen noch nicht der Art wie GLP-Nebenbedingungen vorzugsweise formuliert werden. Daher werden Variablen $e_i$ eingeführt, die beschreiben, ob die Pumpe Q in dem Intervall $t_i, t_{i+1}$] eingeschaltet ist oder nicht. Damit werden die Bedingungen b) und f) wie folgt ersetzt:

b) $e_i \in \{0,1\}, q_i = 2e_i$
f) Für alle $1 \le i \le n - 2 \qquad 0 \le e_i \le e_{i-1} + e_{i+1}$

Damit sind alle Bedingungen (A)-(F) für die GLP-Beschreibung formuliert. Es läßt sich zeigen, daß sich aus zulässigen Punkten der GLP-Beschreibung mittels der Bedingungen (g) und (h) Funktionen r, q, p, b berechnen lassen, die allen Bedingungen (A)-(F) genügen. Durch die Wahl von stückweise konstanten Funktionen für den Fluß erfolgt eine Reduzierung der möglichen Lösungen. Es werden Funktionen p und q betrachtet, die nur zur vollen und halben Stunde schalten.

GLP MODELLIERUNG 2:

Bei der zweiten Abbildung sind beliebige Schaltzeitpunkte zugelassen. Diesmal entsprechen die Variablen $r_i$, $p_i$, $q_i$ dem Gesamtfluß in dem Zeitintervall $t_i$, $t_{i+1}$]. Es gilt also der Zusammenhang

$$g) \qquad r_i = \int_{t_i}^{t_{i+1}} r(t)dt \ , \quad p_i = \int_{t_i}^{t_{i+1}} p(t)dt, \quad q_i = \int_{t_i}^{t_{i+1}} q(t)dt$$

$$\text{für } i=0,..,n-1$$

Für das Volumen werden wieder Variablen bi eingeführt, die dem Volumen zum Zeitpunkt ti entsprechen:

h) $b_i = b(t_i)$ für i = 0, .., n

Für die Modellierung der Schaltrestriktion bei Q werden die Variablen $e_i$ eingeführt. Diesmal beschreiben die Variablen $e_i$, ob die Pumpe Q zum Zeitpunkt $t_i$ eingeschaltet ist oder nicht. Hieraus ergeben sich die folgenden Nebenbedingungen für das GLP Modell:

a) $0 \leq p_i \leq 30$
$b_1$) $e_i \in \{0,1\}$, $0 \leq q_i \leq 60$
$b_2$) $e_i = 0$, $e_{i+1} = 0 \Rightarrow q_i = 0$
$b_3$) $e_1 = 1$, $e_{i+1} = 1 \Rightarrow q_i = 60$
c) $0 \leq r_i \leq 30$
d) $200 \leq b_i \leq 1000$, $b_0 = b(0) = 300$, $b_n = b(T) = 300$
e) $b_{i+1} - b_i = r_i - p_i - q_i$
f) Für alle $0 \leq i \leq n-2$ $\qquad e_{i+1} \leq e_i + e_{i+2}$

Die Bedingungen (a), (c ), $b_1$) und (e) ergeben sich direkt aus Integration der Bedingungen (A), (C), (B) und (E). Die Bedingungen (d), (e) folgen direkt aus (D) und (E). Wieder werden die Bedingungen $b_2$) und $b_3$) als Ungleichungen formuliert:

$b_2$) $q_i \leq (e_i + e_{i+1}) * 60$
$b_3$) $q_i \geq 60(e_i + e_{i+1} - 1)$

Damit folgt eine GLP-Beschreibung aus den Gleichungen (A)-(F). Diesmal mußten ganzzahlige Variablen lediglich zur Modellierung von Schaltrestriktionen eingeführt werden. Die Pumpe P führt zu kontinuierlichen Variablen $p_i$. Im Unterschied zur ersten Abbildung wird jeweils in (g) und (h) die Berechnung der Funktionen p, q, r und b aus den Variablen nicht festgelegt. Es können leicht Funktionen p und q ermittelt werden, die zu Werten $p_i$ und $q_i$ die Bedingung (g) erfüllen.

BEISPIEL:

Die Flußwerte $q_0 = 60$, $q_1 = 30$, $q_2 = 0$, $q_3 = 60$ für die entsprechenden Intervalle werden z.B. durch die Funktion q(t) = 2 für t $\in$ [0,45[, q(t) = 0 für t $\in$ [45,90[ und q(t) = 2 für t $\in$ [90,120] erfüllt. Berechnet man auf diese Art die Funktionen für p, q und r, so läßt sich das Volumen b(t) durch die Bedingung (E) bestimmen. Allerdings werden die Bedingungen (D) und (F) von diesen Funktionen nicht notwendigerweise erfüllt! Statt dessen gelten die folgenden Bedingungen:

$\tilde{D}$) Für alle $t_i = 30 * i$ gilt $200 \leq b(t_i) \leq 1000$

$\tilde{r}$) Für alle $t_i = 30 * i \ t_1 \le t_2 \le t_3$
mit $t_3 - t_1 \le 60 * 60$ gilt:
$q(t_1) = q(t_2) = 0 \Rightarrow q(t_3) = 0$

Füllstandsrestriktionen werden also halbstündig beachtet. Aus der vorgegebenen Mindestbetriebszeit von einer Stunde, ist die Bedingung geworden, eine nach 0:00 (0:30, 1:00 ....) Stunden eingeschaltete Pumpe, erst nach 1:00 (1:15, 1:30) Stunden wieder auszuschalten. Ein Einschalten um 0:29 und Ausschalten um 1:01 ist damit möglich!

Fazit: Bei der Modellierung von Planungsprobleme als GLP können verschiedene Verfahren verwendet werden. Bei dem ersten Ansatz wurden nur stückweise konstante Funktionen betrachtet. Bei diesem (zweiten) Ansatz führen alle diskreten Regelungsgrößen zu ganzzahligen Variablen. Ergebnis einer Optimierung ist dann eine Regelung, die allen Bedingungen genügt.

Bei dem zweiten Ansatz wurden die Variablen und Gleichungen des mathematischen Modells aus den kontinuierlichen Bedingungen durch Integration abgeleitet. Ergebnis der Optimierung sind hier nur Eckdaten für die Regelungsgrößen. Bei der Rückrechnung von Funktionen aus diesen Eckdaten entstehen Funktionen, die manchen Bedingungen nur zu bestimmten Zeitpunkten genügen. Dafür sind die verwendeten mathematischen Modelle einfacher. Dieses Verfahren eignet sich insbesondere dann, wenn das Modell z.B. durch Prognoseunsicherheiten die Realität ohnehin nur unscharf abbildet.

MODULKONZEPT

Die Modellbildung (Modellierung) des technischen Systems bzw. der technischen Anlage erfolgt bevorzugt mittels Komponenten, die Teilen des realen technischen Systems bzw. der realen Anlage entsprechen. Für die mathematische Beschreibung ist oftmals eine funktionale Betrachtung der Produktion notwendig. Bei vielen Planungsproblemen (z.B. Batchproblemen, Reihenfolgeproblemen) ist das mathematische Modell daher nicht aus dem Anlagenaufbau abzuleiten. Hier werden Modelle durch Beziehungen zwischen Zeitpunkten in der Produktion oder aus Produktionsschritten ermittelt.

Nachfolgend wird eine Konzept vorgestellt, mit dem trotz der verschiedenen zu verwendenden Modelle eine automatische Modellierung eines realen technischen Systems ermöglicht wird. Erreicht wird dieses durch die Einführung einer Zwischenebene zwischen dem eigentlichen mathematischen Modell und den Komponenten der Anlagenbeschreibung. Die Objekte dieser Zwischenebene werden im folgenden als Module bezeichnet.

Hierbei besteht ein Modul aus einem technischem Objekt (oder aus Eigenschaften des technischen Objektes) und aus Abbildungen dieses Objekts (bzw. seiner Eigenschaften) auf verschiedene mathematische Beschreibungen.

Ein Modul verfügt über Variablen (boolsche Größen und kontinuierliche Größen), Inports, mit denen auf die Variablen anderer Module zugriffen werden kann, Outports die den Zugriff auf eigene Variablen ermöglichen, sowie über eine Beschreibung von Restriktionen zwischen eigenen und fremden Variablen.

In einer Modulbibliothek werden für jedes Modul Abbildungen auf ein oder mehrere der im vorigen Abschnitt erläuterten mathematischen Beschreibungen hinterlegt. Für jedes Modul ist insbesondere eine Abbildung auf das allgemeinste Modell, die GLP-Beschreibung hinterlegt.

Beim Anlegen von Komponentenbibliotheken werden bevorzugt Abbildungen der Komponenten auf Module bestimmt. Welche Module für welche Komponenten benutzt werden, wird in der Komponentenbibliothek hinterlegt. Damit ist eine Generierung der Klassen unter Verwendung von Modulbibliotheken ermöglicht.

Aus dem Anlagenaufbau werden zunächst die Klassen instanziiert, die aus den Komponententypen generiert wurden. Anschließend wird die zweite Ebene (die Ebene der Module) instanziiert. Die Verwendung eines Moduls bestimmt nun die möglichen mathematischen Beschreibungen. Nur diejenige mathematische Beschreibung kann bei der Modellierung eingesetzt werden, für die eine Abbildung in allen Modulen existiert. Eine Modellierung als GLP-Beschreibung ist bei allgemeiner Verfügbarkeit derselben immer möglich. Durch eine Priorisierung der mathematischen Beschreibungen kann die optimale mathematische Beschreibung automatisch ermittelt werden.

MODULE UND KOMPONENTEN - BEISPIELE

Komponenten entsprechen in der Anlagenbeschreibung Anlagenteilen. Im Gegensatz hierzu beschreiben Module bevorzugt das Verhalten eines Anlagenteils aus Sicht der Produktionsplanung. Daher ist es sinnvoll, allgemeinere Abbildungen zwischen den Komponenten und den Modulen zuzulassen. Hierzu einige Beispiele:

Ein typisches Modul ist ein Speicherelement. In diesem Speicher wird eine bestimmte Menge Vmax eines Stoffes gespeichert. Dieses Modul verfügt über eine Variable, das gespeicherte Volumen. Dieses Volumen wird durch den Parameter (Vmax) eingeschränkt. Hierbei ist die Art des gespeicherten Stoffes unerheblich. Zu- und Abfluß ergeben sich aus dem Durchfluß durch ankommende Rohre. Diesen Rohren entsprechen wiederum einfache gerichtete Module, aus denen Stoff zwischen 0 und fmax (Einheit: Stoff/Zeit) fließt. Diese Module verfügen über eine Variable, den Fluß durch das Rohr. Auf diese Variable wird über Ports zugegriffen (Eingang, Ausgang, evtl. Kosten) .

Als Komponente entspricht diesen Modulen z.B. ein Wassertank mit Mindestfüllstand, Maximalfüllstand und einem maximalen Ausfluß. Das Verhalten einer Komponente wird durch ein Zusammenspiel mehrerer Module beschrieben.

Bei der Modellierung von Trinkwassernetzen werden umgekehrt verschiedene Komponenten zu einer logischen Einheit zusammengefaßt. So werden Behälter, die mit ungeregelten Rohrleitungen verbunden sind und sich wie gekoppelte Rohre verhalten, zu einem "virtuellen Behälter" zusammengefaßt. Hierzu wird in der Komponentenhierarchie eine Komponente Teilnetz eingeführt. Mit dem Modulkonzept ist die explizite Einführung einer derartigen Komponente nicht unbedingt notwendig. Die Regel "Behälter, die durch ungeregelte Rohrleitungen verbunden sind, werden durch ein Modul repräsentiert" kann in die Modulerzeugung eingebaut werden.

BEISPIEL: TRINKWASSERNETZ; MODELLIERUNG OHNE DRÜCKE

Bei Trinkwassernetzen wird bei der Planung der Einfluß der Druckverhältnisse vernachlässigt. Aus der Physik werden nur die Massenbilanzen in dem Optimierungsmodell verwendet. Dieses Vorgehen erfordert eine sehr grobe Sichtweise auf das Trinkwassernetz. Alle Rohre, zu denen keine Mengenvorgaben von der Planung vorgegeben sind, führen zu großen Komponenten, die nicht weiter aufgelöst werden. Bei dem Beispiel der Stadt Basel wird das gesamte Innenstadtnetz mit 4 Behältern und etwa 20 Verbrauchergruppen zu einem großen "virtuellen" Behälter zusammengefaßt. Die Ausgleichsbewegungen zwischen den Behältern werden nicht modelliert. Dieses Vorgehen wird vom Modulkonzept unterstützt.

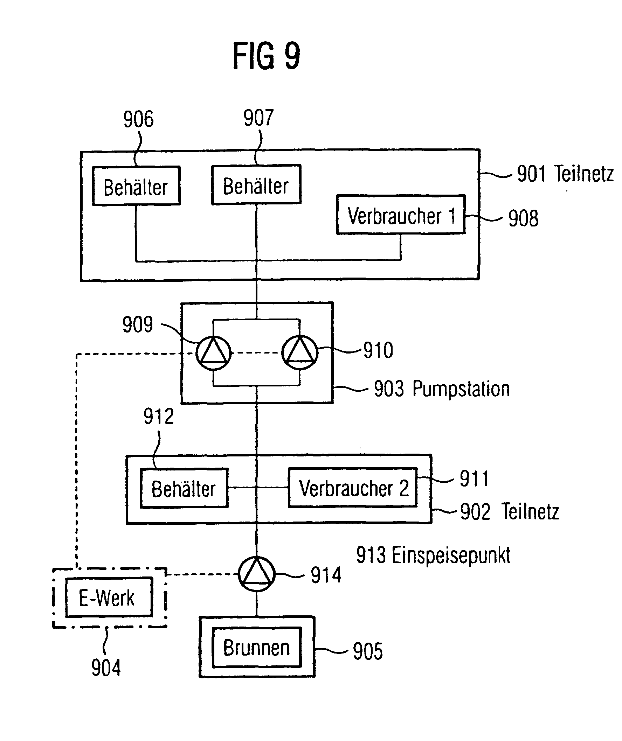

**Fig.9** zeigt ein Beispiel eines Trinkwassernetzes in Komponentenstruktur. Dargestellt ist die vereinfachte Komponentenstruktur des Trinkwassernetzes. Die Verbindungen stellen Materialflüsse, hier Wasser und Strom, dar. Ein Teilnetz 901 mit zwei Behältern 906, 907 und einem Verbraucher 908 ist mit einer Pumpstation 903 verbunden. Die Pumpstation 903 enthält zwei Pumpen 909, 910 und wird von einem E-Werk 904 mit Strom versorgt. An die Pumpstation 903 ist ein Teilnetz 902 mit einem Behälter 911 und einem Verbraucher 912 angeschlossen. Das Teilnetz 902 ist an einen Einspeisepunkt 913 angeschlossen, der eine Pumpe 914 enthält, die von dem E-Werk 904 mit Strom versorgt wird und aus einem Brunnen 905 Wasser in das Teilnetz 902 pumpt.

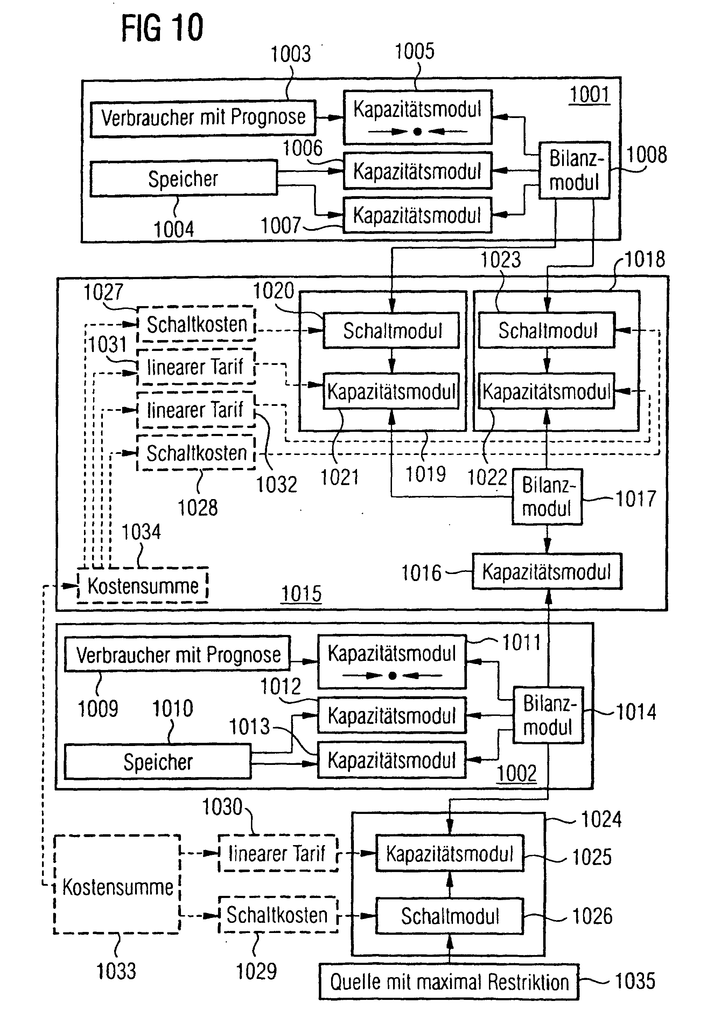

In **Fig.10** ist die Modulstruktur des Trinkwassernetzes aus Fig.9 dargestellt. Bei den Teilnetzen 1001 und 1002 (bzw. 901 und 902 in Fig.9) werden die Teilkomponenten Behälter, Rohre, T-Stücke und Verbraucher durch jeweils sechs Module abgebildet. Die Speicher 1004, 1010 repräsentieren jeweils das Gesamtvolumen in dem Trinkwassernetz. Verbraucher mit Prognose 1003, 1009 entsprechen jeweils dem Gesamtverbrauch in dem jeweiligen Teilnetzen 1001 bzw. 1002. Die Kapazitätsmodule 1005, 1006, 1007, 1011, 1012, 1013 liefern die Variablen für den Zu- und Abfluß, sowie für den Verbrauch. In den obersten Kapazitätsmodulen 1005, 1011 wurde jeweils dieser "innere" Zusammenhang zwischen Ports und Variablen angedeutet. Die Bilanzgleichung liefern die Bilanzmodule 1008, 1014.

Die Restriktionen an die Fördermenge der Pumpstation 1015 (bzw. 903 in Fig.9) werden durch ein Kapazitätsmodul 1016 realisiert. Ein Bilanzmodul 1017 koppelt den Gesamtfluß der Pumpstation mit dem Fluß der Pumpen. Für jede Pumpe 1018, 1019, 1024 (vgl. 909, 910, 914 in Fig.9) werden Kapazitätsbeschränkungen und Schaltrestriktionen in je zwei Modulen 1020/1021, 1023/1222 bzw. 1025/1026 abgelegt. Zur Modellierung von Schaltrestriktionen können verschiedene Arten von Modulen verwendet werden. Schaltmodule verwenden zwar eigene Variablen für die Schaltzustände, die Flußvariable wird jedoch nur "durchgereicht" (vgl. jeweils Schaltmodul 1020, 1023, 1025). Die Gesamtbetriebskosten der Pumpstation werden aus Schaltkosten 1027, 1028, 1029 und Energiekosten 1030, 1031, 1032 errechnet und jeweils in der Kostensumme 1033, 1034 zusammengefaßt.

Die Grundwasserpumpe 1024 (bzw. 914) wird ebenfalls über ein Kapazitätsmodul 1025 und ein Schaltmodul 1026 dargestellt. Bei dem Brunnen 1035 (bzw. 905) werden Tagesmengenrestriktionen in der Quelle abgebildet. Die Gesamtbetriebskosten werden in einem Kostenmodul gesammelt.

Bei dieser Modellierung werden zur Veranschaulichung einfache Module eingesetzt. Dadurch erklärt sich die hohe Zahl der verwendeten Module. Gleichzeitig zeigt diese Modellierung, daß Komponenten wie Teilnetz, Pumpen, Pumpstationen generisch auf Module abgebildet werden können. Somit ist es möglich, durch Angabe einer Konstruktionsvorschrift für jeden Komponententyp ein konsistentes Gesamtmodell zu erhalten. Entscheidend für die Frage, welche mathematische Beschreibung gewählt wird, sind die drei Schaltmodule 1020, 1023 und 1026. Werden nur Schaltmodule ohne "harte" Restriktionen gewählt, so kann das Netzwerkflußmodell mit einer durch die Schaltmodule gesteuerter Heuristik zur Schaltungsverringerung verwendet werden. Werden hingegen harte Schaltzeitrestriktionen oder Schaltkosten verwendet, so bleibt nur die GLP-Beschreibung.

Die Modellierung von Bedingungen an den maximalen Stromverbrauch erfordert leicht abgewandelte Module. Die Kapazitätsmodule der Pumpen werden derart abgeändert, daß anstelle der Kosten der Stromverbrauch ausgegeben wird. Anstelle der Kostensummierungsmodule werden nun einfache Bilanzmodule verwendet, um den Stromfluß abzubilden. Für diesen Stromfluß wird durch ein Kapazitätsmodul eine Obergrenze vorgegeben. Durch den Anschluß an eine "Stromquelle" (E-Werk) wird das System geschlossen. Hier werden auch zeitabhängige Kosten mitberücksichtigt.

Kritisch ist die Modellierung des Zusammenhanges von Energieverbrauch und Fluß in den Pumpen. Je nach Verlauf der Kennlinien werden ganzzahlige Variablen eingesetzt. Wird ein Energieverbrauch proportional zur Wassermenge angenommen, so führt diese Modellierung (ohne Schaltrestriktionen) auf eine LP-Beschreibung, die schnell gelöst werden kann.

DREI-TANK-BEISPIEL: MODELLIERUNG DES DRUCKS

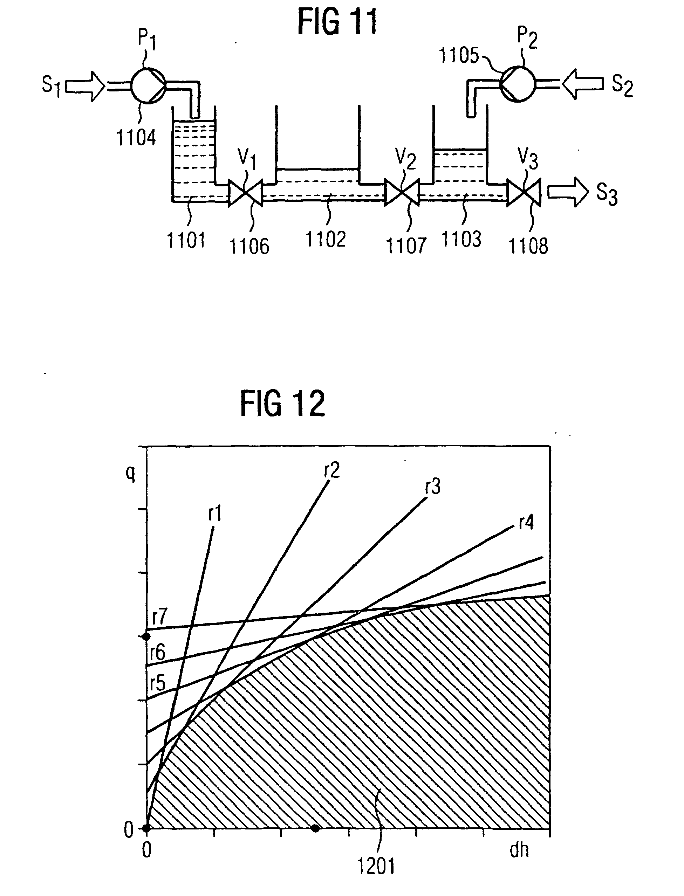

Bei dem Dreitankbeispiel (vgl. **Fig.11**) werden drei Tanks 1101, 1102 und 1103 in Reihe betrieben. Es erfolgt ein Zufluß über zwei Pumpen 1104 und 1105, die zwei verschiedene Stoffe S1 und S2 in das System einleiten. Zwischen den Tanks befinden sich Ventile 1106, 1107 und 1108, die ein Zurückfließen verhindern. Der Durchfluß bei geöffneten Ventilen 1106 und 1107 ergibt sich aus dem Torricelligesetz. In dem Tank 1103 werden der Stoff S1 und der zugeführte Stoff S2 miteinander vermischt. Der über das Ventil 1108 ausfließende Stoff S3 soll zu mindestens 25% aus dem Stoff S2 bestehen. Kosten entstehen bei dem Prozeß in Form von Energiekosten (als Funktion der Höhe der Tanks) und Rohstoffkosten (Kosten für die Stoffe S1 und S2). Mit dem Stoff S3 kann ein bestimmter Ertrag erwirtschaftet werden. Damit ergibt sich das Optimierungsproblem, einen Betriebsplan zu ermitteln, der den Ertrag maximiert. Hierzu werden zyklische Betriebspläne mit jeweils maximalem Durchsatz bestimmt.

Bei dem Dreitankbespiel wird zur Berechnung des optimalen Betriebsplans der Druck nicht vernachlässigt. Dennoch ist eine Modellierung als LP-Beschreibung bzw. GLP-Beschreibung mit wenigen (boolschen) Variablen möglich. Hierzu müssen zunächst zwei Probleme gelöst werden:

a) die Beschreibung von Durchflüssen als Funktion von Regelung und Druckdifferenzen und
b) die Beschreibung von Mischungsrestriktionen.

Bei der Erzeugung des Metamodells wird die Integration von physikalischen Zusammenhängen eingesetzt. Dies entspricht dem zweiten der oben vorgestellten Ansätze.

Zur Modellierung des Flusses zwischen zwei Behältern durch ein Rohr mit Ventil werden zwei zusätzliche Module bestimmt:

SPEICHERMODUL MIT NIVEAULINIE - MODULBESCHREIBUNG:

Parameter:

A        Volumen pro Höhe,
$h_{Min}$        minimales Niveau
$h_{Max}$        maximales Niveau

Variablen:

h(t)    Niveau

In-Ports:

x(t)    Zufluß/Zeit
y(t)    Abfluß/Zeit

Restriktionen:

$$\dot{h}(t) = \frac{1}{A}\,(x(t) - y(t))$$

$$h(T) = h(0).$$

$$h_{Min} \leq h(t) \leq h_{Max}$$

SPEICHERMODUL MIT NIVEAULINIE - LP-BESCHREIBUNG:

Eine Variable $h_i$ für jeden Zeitpunkt und die üblichen Gleichungen (siehe oben):

$$h_i = h_{i-1} + \frac{1}{A}(x_i - y_i)$$

$$h_n = h_0$$

$$h_{Min} \leq h_i \leq h_{Max}$$

DRUCKABHÄNGIGES KAPAZITÄTSMODUL - MODULBESCHREIBUNG:

Parameter:

f(x)    Fluß als Funktion des Durchflusses nach dem Torricelligesetz

Variablen:

   $q(t) \in R$ : Durchfluß,
   $e(t) \in R$ : Schaltzustand

In-Ports:

h(t)    Niveau im Eingangsbehälter
$\bar{h}$(t)    Niveau im Ausgangsbehälter Out-Ports:

x(t)    $\rightarrow$ q(t)

Restriktionen:

   $q(t) = 0$ falls $e(t) = 0$
   $q(t) = f(h(t) - \bar{h}(t))$ falls $e(t) = 1$

DRUCKABHÄNGIGES KAPAZITÄTSMODUL - LP-BESCHREIBUNG:

Für alle Zeitintervalle eine Variable:

$$q_i = \int_{t_i}^{t_{i+1}} q(t)dt$$

und eine Variable $dh_i$, die in etwa der mittleren Höhendifferenz in einem Zeitintervall entspricht

$$dh_i = 1/2\,(h_i + h_{i+1} - \bar{h}_i - \bar{h}_{i+1}).$$

**EP 1 067 444 B1**

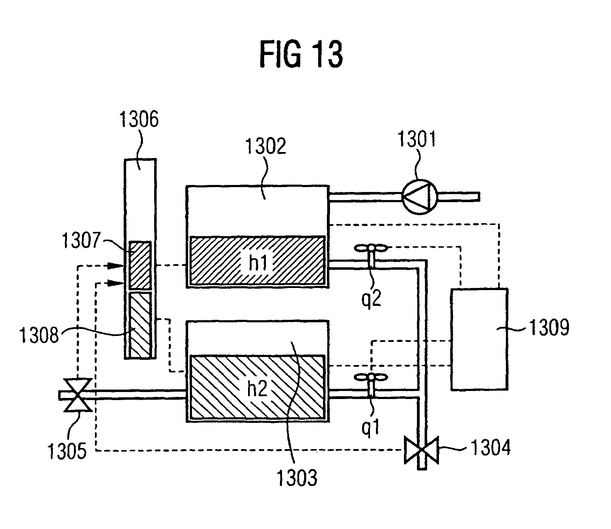

Die Einhaltung der Restriktion $q_i \leq f(dh_i)$ wird durch die in **Fig.12** dargestellten Ungleichungen (r1,..,r7) gewährleistet, die sich aus der linearen Approximation des Torricelligesetzes ergeben (siehe dort Bereich 1201).
Damit ist die approximative Abbildung des Torricelligesetzes in lineare Restriktionen und kontinuierlichen Variablen ermöglicht.
Das zweite Problem bei der Modellierung ist die Durchmischungsrestriktion im letzten Tank 1103 und im Abflußrohr. Als Erläuterung für die folgende Modellierung eines Mischbehälters wird das folgende physikalische Referenzmodell eingesetzt (siehe **Fig.13**): Der Mischbehälter wird durch zwei Behälter 1302 und 1303, in denen die beiden Flüssigkeiten getrennt aufbewahrt werden, ersetzt. In dem Modell werden die beiden Flüssigkeiten nicht in einem Tank, sondern in einem Rohr 1306 gemischt. Durch eine "Wassersäule" 1307 und 1308 wird die Summe der Füllstände als Referenzwert an Ventile 1304 und 1305 weitergegeben. Damit werden die Bedingungen für das Torricelligesetz an den beiden Ventilen 1304 und 1305 formuliert. Ein Regelungsmodul 1309 übernimmt die "physikalische" Mischung der beiden Flüssigkeiten. Hierbei muß das folgende Mischungsgesetz eingehalten werden:

$$\frac{h^1(t)}{h^2(t)} = \frac{q^1(t)}{q^2(t)} \tag{21}.$$

Gleichzeitig ergibt sich eine Vorgabe aus der Produktion:

$$\frac{q^1(t)}{q^2(t)} \leq \frac{1}{3} \tag{22}.$$

Das Mischungsgesetz ist nicht linear. Daher werden im Rahmen der Modellierung Approximationen gewählt werden. Folgende Lösungen sind denkbar:

a) das Verhältnis wird aus 1/3 für Behälter und Abfluß festgelegt; diese Lösung verschärft die Bedingungen, da das Verhältnis zwischen den Volumina festgelegt wird:

$$3h^1(t) = h^2(t), \qquad 3q^1(t) = q^2(t)$$

b) das Verhältnis von 1/3 wird nun dann für Behälter und Abfluß festgelegt, wenn die Klappe offen ist; diese Lösung bietet die Möglichkeit bei geschlossen Abflußventil andere Mischungsverhältnisse im Tank zu erhalten:

$$v^i > 0 \Rightarrow (3h^1(t) = h^2(t), \qquad 3q^1(t) = q^2(t))$$

c) das Mischungsverhältnis von Tank und Abfluß wird entkoppelt; Damit sind physikalisch unmögliche Lösungen mathematisch zulässig:

$$v^i > 0 \Rightarrow (3h^1(t) \leq h^2(t), \qquad 3q^1(t) \leq q^2(t))$$

d) die Mischungsbedingung wird approximiert.

$$A_i \leq \frac{h^1}{h^2} \leq A_{i+1} \Rightarrow \quad A_i \leq \frac{q^1}{q^2} \leq A_{i+1}$$

Jede der hier vorgestellten Möglichkeiten 'a)' bis 'd)' führt zu verschiedenen GLP-Beschreibungen. Bei der Entwicklung eines entsprechenden Moduls sind die verschiedenen Möglichkeiten zu untersuchen und zu testen.

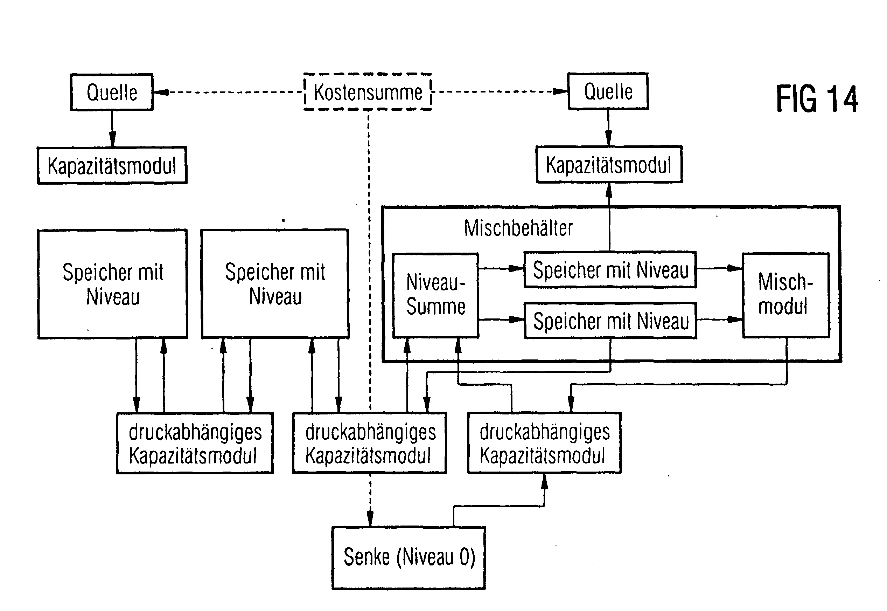

In **Fig.14** ist die gesamte Moduldarstellung des Drei-Tank-Beispiels dargestellt, aus der sich je nach Modellierung der einzelnen Module verschiedene mathematische Formulierungen erzeugen lassen. Fig.14 ist im Zusammenhang mit obigen Ausführungen aus sich heraus verständlich.

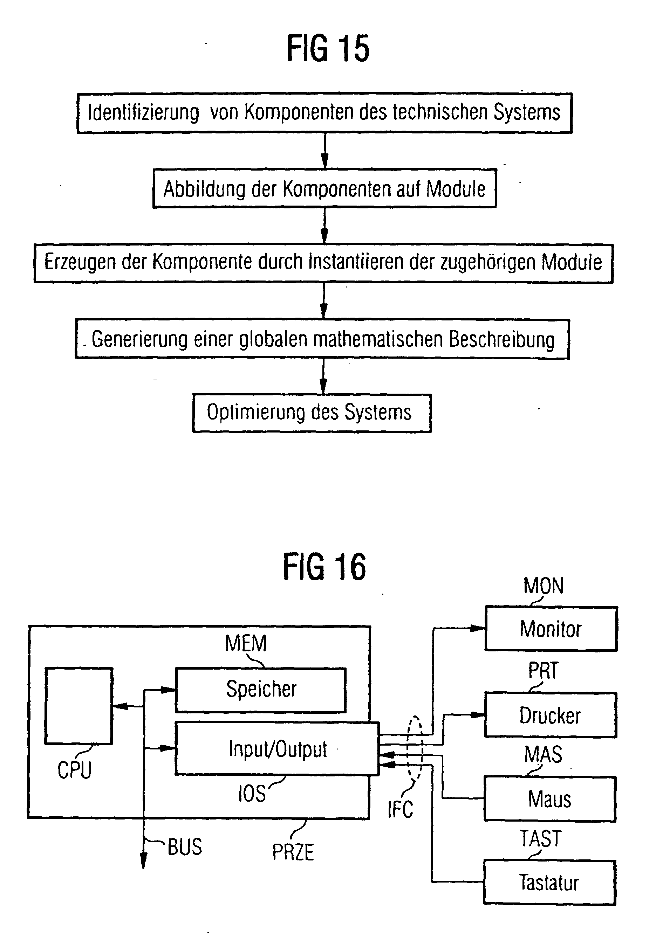

In **Fig.15** ist ein Blockdiagramm mit Schritten eines Verfahrens zur Modellierung eines technischen Systems dargestellt. In einem Schritt 1501 werden - vorzugsweise am Vorbild der natürlicher Einheiten des realen Systems -Komponenten eines technischen Systems identifiziert und in einem Schritt 1502 jede Komponente auf mindestens ein Modul abgebildet. Das Modul selbst umfaßt eine oder mehrere mögliche mathematische Beschreibungen der ihm zugrundeliegenden technischen Einheit. Im Rahmen der Modellierung wird das technische Systems durch sein Modell nachgebildet, indem die Komponenten erzeugt werden (vergleiche Schritt 1503). Dadurch werden die den Komponenten zugrundeliegenden Module instantiiert und dadurch, gemäß der Struktur der Komponenten, eine globale mathematische Beschreibung generiert (Schritt 1504), die das technische System beschreibt und modelliert. Durch die Beschreibung des ganzen Systems (der ganzen Anlage) in Form einer globalen mathematischen Beschreibung ist im Zuge nachfolgender Schritte wie Planung oder Entwurf einer konkreten technischen Ausprägung, das komplexe System als Modell für einen Rechner handhabbar. Eine bevorzugte Handhabung besteht darin, das System zu optimieren bzw. auszulegen nach vorgegebenen Gesichtspunkten (Zielfunktion, Kostenfunktion). Da eine mathematisch faßbare Beschreibung vorliegt, ist ein vielfältiger Einsatz derselben, insbesondere im Rahmen einer Optimierung (siehe Schritt 1505), möglich. Einzelheiten hierzu ergeben sich aus den obigen Ausführungen.

In Fig.16 ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnis:

[1] G.L.Nemhauser, L.A.Wolsey: "Integer and Combinational Optimization", Wiley Interscience Series in Discrete Mathematics and Optimization, Wiley 1998.

[2] C.A.Flondas: "Nonlinear and Mixed Integer Optimization", Oxford University Press, 1996.

[3] S.Thienel: "ABACUS", Institut für Informatik, Universität zu Köln, 1996.

[4] "Using the CPLEX Callable Library", Dokumentation 1995.

[5] R.Wunderling: "SOPLEX-Dokumentation", ZIB Berlin, 1996.

**Patentansprüche**

**1.** Verfahren zur Modellierung eines technischen Systems,

a)bei dem als Teil des technischen Systems mindestens eine Komponente identifiziert wird;
b)bei dem jede Komponente auf mindestens ein Modul abgebildet wird, wobei jedes Modul ein technisches Objekt und eine Abbildung dieses Objekts in eine mathematische Beschreibung umfaßt;
c)bei dem die mindestens eine Komponenten erzeugt wird, indem das mindestens eine Modul der Komponente erzeugt wird;
d)bei dem durch Erzeugung des mindestens einen Moduls eine globale mathematische Beschreibung des technischen Systems erstellt wird, die sich aus der mathematischen Beschreibung jedes Moduls und der Verbindung der Module untereinander ergibt;
e)bei dem die globale mathematische Beschreibung die Modellierung des technischen Systems darstellt;
f)bei dem die globale mathematische Beschreibung hinsichtlich mindestens einer vorgegebener Restriktion optimiert wird, indem mittels eines vorgebbaren Lösungsprogramms ein Ergebnis ermittelt wird

**2.** Verfahren nach Anspruch 1,
bei dem die Modellierung zum Entwurf eines realen technischen Systems eingesetzt wird.

**3.** Verfahren nach Anspruch 1,
bei dem die Modellierung zur (optimierten) Steuerung eines realen technischen Systems eingesetzt wird.

**4.** Verfahren nach einem der vorhergehenden Ansprüche,
bei dem das technische Objekt durch seine Eigenschaften in der zugehörigen mathematischen Beschreibung dieses Objekts dargestellt wird.

**5.** Verfahren nach einem der vorhergehenden Ansprüche,
bei dem in dem Modul zeitlich veränderliche Größen beschrieben werden.

**6.** Verfahren nach einem der vorhergehenden Ansprüche,
bei dem für jedes Modul mehrere Typen mathematischer Beschreibungen verfügbar sind.

**7.** Verfahren nach Anspruch 6,
bei dem die globale mathematische Beschreibung von demjenigen Typ ist, der in allen der globalen mathematischen Beschreibung zugrundeliegenden mathematischen Beschreibungen verfügbar ist.

**8.** Verfahren nach Anspruch 7,
bei dem die Typen der mathematischen Beschreibungen hierarchisch vorsortiert sind, so daß automatisch die globale mathematische Beschreibung von bevorzugtem Typ ist.

**9.** Verfahren nach einem der vorhergehenden Ansprüche,
bei dem die Restriktion eine der folgenden Möglichkeiten ist:

a)technische Restriktion;
b)vorgegebene Kosten;
c)Berücksichtigung von Umweltbedingungen.

**10.** Verfahren nach einem der Ansprüche 6 bis 9,
bei dem als Typen der mathematischen Beschreibungen möglich sind:

a)Lineare Optimierung (LP);
b)Netzwerkflußprobleme (MCF);
c)Gemischt ganzzahlige lineare Programme (GLP).

**11.** Verfahren nach Anspruch 10,
bei dem für jedes Modul zumindest eine mathematische Beschreibung vom Typ "Gemischt ganzzahlige lineare Programme (GLP)" verfügbar ist.

**12.** Anordnung zur Modellierung eines technischen Systems,
mit einer Prozessoreinheit, die derart eingerichtet ist, daß

a)als Teil des technischen Systems mindestens eine Komponente identifizierbar ist;
b)jede Komponente auf mindestens ein Modul abbildbar ist, wobei jedes Modul ein technisches Objekt und eine Abbildung dieses Objekts in eine mathematische Beschreibung umfaßt;
c)die mindestens eine Komponenten erzeugbar ist, indem das mindestens eine Modul der Komponente erzeugt wird;
d)durch Erzeugung des mindestens einen Moduls eine globale mathematische Beschreibung des technischen Systems erstellbar ist, die sich aus der mathematischen Beschreibung jedes Moduls und der Verbindung der Module untereinander ergibt;
e)die globale mathematische Beschreibung die Modellierung des technischen Systems ergibt;
f)die globale mathematische Beschreibung hinsichtlich mindestens einer vorgegebener Restriktion optimierbar ist, indem mittels eines vorgebbaren Lösungsprogramms ein Ergebnis ermittelt wird

# EP 1 067 444 B1

**Claims**

1. A method for modelling a technical system,

   a) wherein at least one component is identified as part of the technical system;
   b) wherein each component is mapped onto at least one module, wherein each module comprises a technical object and a mapping of this object into a mathematical description;
   c) wherein the component, of which there is at least one, is created by the creation of the module of the component, there being at least one such module;
   d) wherein by creating the module, of which there is at least one, a global mathematical description of the technical system is produced, said global mathematical description deriving from the mathematical description of each module and from the connection of the modules to each other;
   e) wherein the global mathematical description represents the modelling of the technical system;
   f) wherein the global mathematical description is optimised in relation to at least one predetermined restriction, by determining a result by means of a solution program which can be specified.

2. The method according to Claim 1,
   wherein the modelling is used for designing a real technical system.

3. The method according to Claim 1,
   wherein the modelling is used for (optimally) controlling a real technical system.

4. The method according to one of the preceding claims,
   wherein the technical object is represented by its properties in the associated mathematical description of this object.

5. The method according to one of the preceding claims,
   wherein temporally changeable quantities are described in the module.

6. The method according to one of the preceding claims,
   wherein a plurality of types of mathematical descriptions are available for each module.

7. The method according to Claim 6,
   wherein the global mathematical description is of the type which is available in all the mathematical descriptions which underlie the global mathematical description.

8. The method according to Claim 7,
   wherein the types of the mathematical descriptions are hierarchically pre-sorted, such that the global mathematical description is automatically of the preferred type.

9. The method according to one of the preceding claims,
   wherein the restriction is one of the following possibilities:

   a) technical restriction;
   b) predetermined costs;
   c) consideration of environmental conditions.

10. The method according to one of the Claims 6 to 9,
    wherein the following types of mathematical description are possible:

    a) linear optimisation (LP);
    b) network flow problems (MCF);
    c) mixed integer linear programs (GLP).

11. The method according to Claim 10,
    wherein at least one mathematical description of the type "mixed integer linear programs (GLP)" is available for each module.

**12.** An arrangement for modelling a technical system, said arrangement having a processor unit and being configured such that

a) at least one component is identifiable as part of the technical system;

b) each component can be mapped onto at least one module, wherein each module comprises a technical object and a mapping of this object into a mathematical description;

c) the component, of which there is at least one, can be created by creating the module of the component, there being at least one such module;

d) by creating the module, of which there is at least one, a global mathematical description of the technical system can be produced, said global mathematical description deriving from the mathematical description of each module and from the connection of the modules to each other;

e) the global mathematical description provides the modelling of the technical system;

f) wherein the global mathematical description can be optimised in relation to at least one predetermined restriction, by determining a result by means of a solution program which can be specified.


**Revendications**

**1.** Procédé pour modéliser un système technique, dans lequel

a) au moins une composante est identifiée en tant que partie du système technique;

b) chaque composante est appliquée sur au moins un module, chaque module comprenant un objet technique et une application de cet objet vers une description mathématique;

c) l'au moins une composante est produite par production de l'au moins un module de la composante;

d) par la production de l'au moins un module, une description mathématique globale du système technique est établie, laquelle résulte de la description mathématique de chaque module et du lien des modules entre eux;

e) la description mathématique globale représente la modélisation du système technique;

f) la description mathématique globale est optimisée, eu égard à au moins une restriction donnée, par la détermination d'un résultat au moyen d'un programme de résolution prédéterminable.

**2.** Procédé selon la revendication 1, dans lequel la modélisation est mise en oeuvre pour la conception d'un système technique réel.

**3.** Procédé selon la revendication 1, dans lequel la modélisation est mise en oeuvre pour la commande (optimisée) d'un système technique réel.

**4.** Procédé selon l'une des revendications précédentes, dans lequel l'objet technique est représenté par ses caractéristiques dans la description mathématique associée de cet objet.

**5.** Procédé selon l'une des revendications précédentes, dans lequel des grandeurs variables dans le temps sont décrites dans le module.

**6.** Procédé selon l'une des revendications précédentes, dans lequel plusieurs types de descriptions mathématiques sont disponibles pour chaque module.

**7.** Procédé selon la revendication 6, dans lequel la description mathématique globale est du type qui est disponible dans toutes les descriptions mathématiques sous-tendant la description mathématique globale.

**8.** Procédé selon la revendication 7, dans lequel les types des descriptions mathématiques sont pré-classés hiérarchiquement de manière qu'automatiquement la description mathématique globale est du type préféré.

**9.** Procédé selon l'une des revendications précédentes, dans lequel la restriction est une des possibilités suivantes:

a) restriction technique,

b) coût donné,

c) prise en compte de conditions environnementales.

**10.** Procédé selon l'une des revendications 6 à 9, dans lequel sont possibles, en tant que types de descriptions mathématiques,

> a) une optimisation linéaire (LP),
> b) des problèmes de flux de réseau (MCF),
> c) des programmes linéaires mixtes en nombres entiers (GLP).

**11.** Procédé selon la revendication 10, dans lequel au moins une description mathématique du type «programmes linéaires mixtes en nombres entiers» est disponible pour chaque module.

**12.** Dispositif pour modéliser un système technique, comprenant une unité de processeur, laquelle est configurée de manière telle que

> a) au moins une composante est identifiable en tant que partie du système technique;
> b) chaque composante est applicable sur au moins un module, chaque module comprenant un objet technique et une application de cet objet vers une description mathématique;
> c) l'au moins une composante peut être produite par production de l'au moins un module de la composante;
> d) par la production de l'au moins un module, une description mathématique globale du système technique peut être établie, laquelle résulte de la description mathématique de chaque module et du lien des modules entre eux;
> e) la description mathématique globale fournit la modélisation du système technique;
> f) la description mathématique globale est optimisable, eu égard à au moins une restriction donnée, par la détermination d'un résultat au moyen d'un programme de résolution prédéterminable.

# FIG 1

101 — nicht lineare gemischt ganzzahlige Optimierung (NLGP)

102 — lineare gemischt ganzzahlige Optimierung (GLP)

103

nicht lineare Optimierung (NLP)

107

lineare Optimierung (LP) — 104

Flußmodelle (MCF) — 105

106
Komplexität

# FIG 3

2 (V1) 
e3 →
e4 ←
(V2) -2

e1

e2

(V3)

0

**FIG 2**

**FIG 4**

**FIG 5**

**FIG 6**

FIG 7

$y_2$

702

$3y1+2y2=6$

2

$y1+y2=1$

701

$2y1+3y2=6$

1

$y1+y2=6/5$

0

0      1      2      $y_1$

FIG 8

Rohr/Klappe R
max. Förderleistung
$1m^3/s$

Behälter B
max. Volumen
$1000\ m^3$
min. Volumen
$200\ m^3$
Initialfüllstand 300
End-Füllstand 300

Pumpe P
Förderleistung $1\ m^3/s$
keine Schaltrestriktion

Pumpe Q
Förderleistung $2\ m^3/s$
min. 1 Std. Betrieb

# FIG 9

## FIG 10

## FIG 11

## FIG 12

# FIG 13

FIG 14

Quelle ← - - - - - - ⌐Kostensumme¬ - - - - - - → Quelle

Kapazitätsmodul

Kapazitätsmodul

Mischbehälter

Speicher mit Niveau | Speicher mit Niveau | Niveau-Summe | Speicher mit Niveau | Misch-modul

Speicher mit Niveau

druckabhängiges Kapazitätsmodul | druckabhängiges Kapazitätsmodul | druckabhängiges Kapazitätsmodul

Senke (Niveau 0)

EP 1 067 444 B1

33

# FIG 15

Identifizierung von Komponenten des technischen Systems

↓

Abbildung der Komponenten auf Module

↓

Erzeugen der Komponente durch Instantiieren der zugehörigen Module

↓

. Generierung einer globalen mathematischen Beschreibung

↓

Optimierung des Systems

# FIG 16

MON

Monitor

PRT

Drucker

MAS

Maus

TAST

Tastatur

MEM

Speicher

Input/Output

IOS

CPU

BUS

PRZE

IFC